(19) Europäisches Patentamt
European Patent Office
Office européen des brevets

(11) **EP 2 575 997 B1**

(12) **EUROPEAN PATENT SPECIFICATION**

(45) Date of publication and mention
of the grant of the patent:
**30.06.2021 Bulletin 2021/26**

(51) Int Cl.:
*B01D 53/04* (2006.01)    *B01D 53/047* (2006.01)

(21) Application number: **11787091.5**

(22) Date of filing: **06.05.2011**

(86) International application number:
**PCT/US2011/035610**

(87) International publication number:
**WO 2011/149640 (01.12.2011 Gazette 2011/48)**

(54) **INTEGRATED ADSORBER HEAD AND VALVE DESIGN AND SWING ADSORPTION METHODS RELATED THERETO**

INTEGRIERTER ADSORBERKOPF SOWIE VENTIL UND SCHWUNGADSORPTIONSVERFAHREN IN ZUSAMMENHANG DAMIT

ENSEMBLE INTÉGRANT TÊTE D'ADSORPTION ET VANNE, ET PROCÉDÉ D'ADSORPTION À FLUX ALTERNATIF S'Y RAPPORTANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.05.2011 PCT/US2011/003555**
**01.03.2011 US 201161448160 P**
**28.05.2010 US 349464 P**

(43) Date of publication of application:
**10.04.2013 Bulletin 2013/15**

(73) Proprietor: **ExxonMobil Upstream Research Company**
**Spring, TX 77389 (US)**

(72) Inventors:
• **FREDERICK, Jeffrey, W.**
**Centreville**
**VA 20120 (US)**
• **FULTON, John, W.**
**Annandale**
**NJ 22003 (US)**
• **TAMMERA, Robert, F.**
**Warrenton**
**VA 20187 (US)**
• **HUNTINGTON, Richard**
**Oak Hill**
**VA 20171 (US)**

(74) Representative: **ExxonMobil Chemical Europe Inc.**
**IP Law Europe**
**Hermeslaan 2**
**1831 Machelen (BE)**

(56) References cited:
**WO-A1-2012/099679    US-A- 2 257 178**
**US-A- 2 438 467    US-A- 4 404 004**
**US-A- 5 212 948    US-A1- 2005 045 236**
**US-B1- 6 176 897    US-B2- 6 660 065**

**Description**

**CROSS-REFERENCE TO RELATED APPLICATIONS**

This application claims the benefit of U. S. Provisional Patent Application number 61/448,160, filed March 1, 2011 entitled INTEGRATED ADSORBER HEAD AND VALVE DESIGN AND SWING ADSORPTION METHODS RELATED THERETO, and U. S. Provisional Patent Application number 61/349,464, filed May 28, 2010 entitled REACTOR WITH REACTOR HEAD AND INTEGRATED VALVE, and PCT Patent Application number PCT/US2011/035553 filed May 6, 2011, entitled REACTOR WITH REACTOR HEAD AND INTEGRATED VALVE.

**FIELD**

The present invention relates to reverse-flow adsorber whose configuration includes poppet valves associated with the adsorber heads which minimizes dead volume between the valve and adsorber bed and provides for a durable valve arrangement. The present invention also relates to the use of such an adsorber and to a process for rapid stream-switching of at least two streams in a reverse-flow adsorber.

**BACKGROUND**

Reverse-flow reactors (RFRs) and adsorption units are known in the art. Typical RFRs include, for example, Wulff pyrolysis and regenerative reactor and other regenerative reactors, including regenerative thermal oxidizers (RTO). These reactors are typically used to execute cyclic, batch-generation, high temperature chemistry. Regenerative reactor cycles are either symmetric (same chemistry or reaction in both directions) or asymmetric (chemistry or reaction changes with step in cycle). Symmetric cycles are typically used for relatively mild exothermic chemistry, examples being regenerative thermal oxidation (RTO) and autothermal reforming (ATR). Asymmetric cycles are typically used to execute endothermic chemistry, and the desired endothermic chemistry is paired with a different chemistry that is exothermic (typically combustion) to provide heat of reaction for the endothermic reaction. Examples of asymmetric cycles are Wulff pyrolysis processes and pressure swing reforming processes (PSR).

To operate the RFRs, various operational features may be considered. For instance, one feature of RFRs is a gas hourly space velocity, which is the space velocity of a gas over a given reactor volume. Typically, a high gas hourly space velocity (and hence reactor productivity) has a small reactor cycle time, while low has hourly space velocity has a longer reactor cycle time. For pyrolysis processes using a RFR, high velocities are needed to achieve short residence times that facilitate conversion to preferred products. A second feature is that the volume of gas remaining in the RFR at the end of one cycle (void volume) should be managed, e.g., swept out, before the beginning of the next cycle, which gas-volume management may result in inefficiency and additional costs. A third feature is that bed structures (packing) needed to provide rapid heat transfer (for sharp thermal gradients and resulting high efficiency) also results in high pressure drop. Thus, the RFR design should consider space velocity, void volume, and packing properties to properly manage the system. Accordingly, certain drawbacks in conventional RFRs, such as properties of conventional packing and long cycle times, have prevented these reactors from being broadly used in the energy and petrochemical fields.

RFRs have historically utilized different packing material in the bed structures. Typically, these reverse-flow reactors utilize checker brick, pebble beds or other available packing. This type of bed structure typically has low geometric surface area ($a_v$), which minimizes pressure drop per unit of reactor length, but also reduces volumetric heat transfer rate. One basic principle of an asymmetric reverse flow reactor is that heat is stored in one step and is used to accomplish a desired endothermic chemistry in a second step. Thus, the amount of desired chemistry that can be achieved, per volume of reactor, is directly related to the volumetric heat transfer rate. Lower heat transfer rates thereby require larger reactor volumes to achieve the same amount of desired chemical production. Lower heat transfer rates may inadequately capture heat from RFR streams, leading to greater sensible heat loss and consequently lower efficiency. Lower heat transfer rates may also lead to longer cycle times, as the stored heat is used more slowly, and therefore lasts longer for a given bed temperature specification. Historic RFR's, with low-$a_v$ checker-brick or pebble bed packing, are larger (e.g., longer and more capital intensive) and have cycle times of two minutes or greater. As such, these reactors limit reactor efficiency and practical reactor size.

As an enhancement, some RFRs may utilize engineered packing within the bed structure. The engineering packing may include a material provided in a specific configuration, such as a honeycomb, ceramic foams or the like. These engineered packings have a higher geometric surface area ($a_v$), as compared to other bed structures. The use of this type of packing allows for higher gas hourly space velocity, higher volumetric reactor productivity, higher thermal efficiency, and smaller, more economical reactors. However, these more-economical reactors use heat more rapidly and thus may require reduced cycle times. Pressure swing reforming processes (PSR) are an example of such a preferred RFR.

Further, as a result of using this type of packing material, the size of the reactor may be reduced, which provides significant capital cost savings. However, adjusting the packing material of the reactors impacts other operational features. For instance, the increase in volumetric surface area ($a_v$) is typically accomplished using smaller flow channels that result in higher pressure drop per unit of reactor length. To compensate for this, these enhanced RFR's are configured to have short lengths. When applied to large petrochemical applications, diameter is increased to enable high productivity, but length is limited by pressure drop, thus leading to a high ratio for diameter per length (D/L). Conventional reactor designs typically collect fluids emerging from a bed and duct those fluids to some external valve. The volume of such ducting is in some proportion to the reactor diameter, because the ducting needs to collect gas from the entire diameter. Thus, for a conventional reactor having a high D/L ratio, the volume of ducting can be very large compared to the volume inside the bed. Use of a conventional reactor design for an enhanced RFR thus results in large void volumes (primarily in the ducting), which creates problems for gas volume management.

Unfortunately, conventional reactor valve systems have certain limitations that do not operate properly for enhanced, high-productivity reactors (e.g., compact reactors employing short cycle times). For instance, conventional reactor valve systems typically fail to meet the durability requirements of RFRs and may not handle the short cycle times. Petrochemical valves can have maximum cycle lifetimes on the order of 500,000 cycles, which correspond to less than one year of operation--inadequate for petrochemical use involving rapid cycle times. In addition, conventional valves are placed outside the reactor and use manifolding to carry gases between the bed and the valve, while providing uniform flow distribution across the bed. Given the wide and short beds of RFRs, this manifolding holds a large gas volume that has to be managed on every cycle change.

Although there are some similarities between the reactors described above and conventional adsorption units, adsorption unit design criteria is often different from reactor design criteria. In adsorption units, there may or may not be a chemical reaction. Many adsorptive processes rely on physical processes that do not involve a chemical reaction. Moreover, adsorption kinetics are often not comparable to reaction kinetics. U.S. Patent Application US 2005/0045236 A1 is directed to a multiple fluid flow controller valve device having radially disposed a number of valves and a central rotary shaft with cam surfaces functioning as the valve controller to open and close the valves in the desired sequence. U.S. Patent 2,438,467 is directed to a method of carrying out a reaction in the presence of solid contact materials and regenerating the solid contact materials in the same reaction chamber. U.S. Patent 2,257,178 is directed to reaction chambers in which the contact mass is arranged in a plurality of separate beds supported within the reaction chamber and in which the flow of products through the reaction chamber are modified during certain periods of operation. U.S. Patent 5,212,948 is directed to a trap muffler apparatus with bypass to a common reactive acoustic element. U.S. Patent 4,404,004 is directed to a method using pressure adsorption techniques for separating individual gas components from gas mixtures on adsorption agents where the pressure relief and rinsing action are caused to occur in two stages using reverse direction of flow.

Accordingly, it is desirable to provide an adsorber that minimizes dead volumes between its valves and adsorber beds, while providing extended valve lifetimes to millions of cycles, in rugged, high-temperature conditions at the adsorber inlet and outlet. Further, there is a need for an enhanced method and apparatus to implement an industrial-scale, adsorber, which has valves that enhance the cycle time and manage the purging of fluid between cycles. The present techniques provide a method and apparatus that overcome one or more of the deficiencies discussed above.

## SUMMARY

Provided is a reverse-flow adsorber as defined in claim 1. According to the present invention, the reverse-flow adsorber comprises an adsorber body partially enclosing an adsorption region, the adsorber body comprising two substantially opposing open ends with a first head capping one end of the adsorber body, a second head capping the opposing end of the adsorber body, a fixed bed disposed within the adsorber body comprising solid material capable of promoting adsorption with a gas stream, at least one gas stream inlet associated with the first head, at least one gas stream outlet associated with the second head, at least one intake poppet valve located in the first head and at least one exhaust poppet valve located in the second head; and at least one gas stream inlet associated with the second head, at least one gas stream outlet associated with the first head, at least one intake poppet valve located in the second head and at least one exhaust poppet valve located in the first head; wherein the at least one intake poppet valve in the first head comprises a disk element connected to a valve stem element, wherein the disk element comprises a flat or profiled surface facing the adsorbent bed, and wherein the distance during operation between the at least one intake poppet valve disk element flat or profiled surface in the fully open position of the valve, when the valve lift is at its maximum, and the fixed bed surface is between 5% and 200% of the disk element diameter.

Provided is also a process for rapid stream-switching of at least two streams in a reverse-flow adsorber as defined in claim 9. According to the invention, the reverse-flow adsorber comprises an adsorber body partially enclosing an adsorption region comprising two substantially opposing open ends with a first head capping one end of the adsorber body, a second head capping the opposing end of the adsorber body, a fixed bed disposed within the adsorber body comprising solid material capable of promoting adsorption with a gas stream, which comprises i) introducing from one or more inlet gas sources at least one first gas stream to at least one gas stream inlet associated with the first head through the first head and into the adsorber body and withdrawing a treated first gas stream from the adsorber body and through the second head to at least one gas stream outlet associated with the second head; wherein said introducing and withdrawing are controlled respectively by at least one intake poppet valve located in the first head and at least one exhaust poppet valve located in the second head; and ii) introducing from one or more inlet gas sources at least one second gas stream to at least one gas stream inlet associated with the second head through the second head and into the adsorber body and withdrawing a treated second gas stream from the adsorber body and through the first head to at least one gas stream outlet associated with the first head, wherein said introducing and withdrawing are controlled respectively by at least one intake poppet valve located in the second head and at least one exhaust poppet valve located in the first head, wherein the at least one intake poppet valve in the first head comprises a disk element connected to a valve stem element, wherein the disk element comprises a flat or profiled surface facing the adsorbent bed, and wherein the distance during operation between the at least one intake poppet valve disk element flat or profiled surface in the fully open position of the valve, when the valve lift is at its maximum, and the fixed bed surface is between 5% and 200% of the disk element diameter.

In claim 10, the invention also relates to the use of a reverse-flow adsorber with the features of claim 1. According to the invention, the at least one intake poppet valve located in the first head has a substantially open position when fluid flow in the flow path is in a first flow direction and a substantially closed position when fluid flow in the flow path is in a second, opposite flow direction.

Preferred embodiments of the present invention are set out in the dependent claims.

In an unclaimed aspect, the space at the top of the adsorber bed that allow for the opening of the valves and the redistribution of the flow is dead volume. The dead volume is preferably swept in swing adsorption methods to obtain higher product recovery. For example, a beneficial dead volume is about 0.5 - 2.0% of the straight side of the vessel at each end. An even flow distribution within the bed is preferred to provide sufficient capacity to make the adsorber economical. Preferably, a coefficient of variance of 0.5-2.0% is provided for the flow rate of the channels.

## BRIEF DESCRIPTION OF THE DRAWINGS

FIG. 1 is an illustration of an asymmetric adsorber with a single head and associated valve assembly not forming part of the present invention.
FIG. 2 is an illustration of an asymmetric adsorber with opposing flat heads and associated valve assemblies and manifolds according to an embodiment of the present invention.
FIG. 3 is an illustration valve assemblies and manifolds as associated with a flat adsorber head for use in the adsorber according to an embodiment of the present invention.
FIG. 4 is an illustration valve assemblies and manifolds incorporated in a dished elliptical head of an asymmetric reverse flow adsorber according to an embodiment of the present invention.

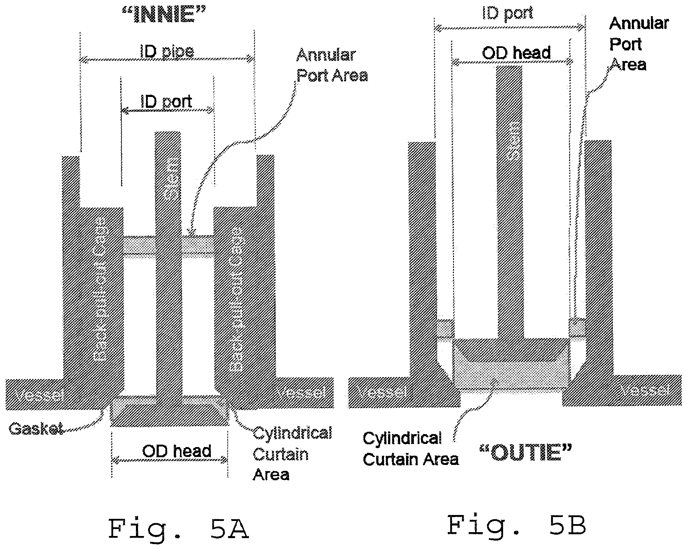

FIGS. 5A and 5B are exemplary poppet valves.

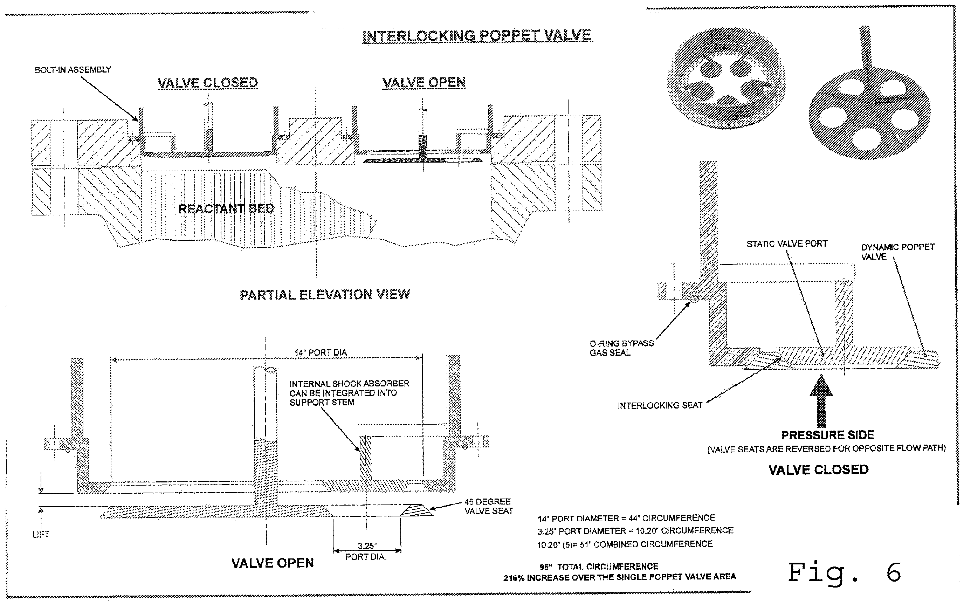

FIG. 6 shows exemplary poppet valves.

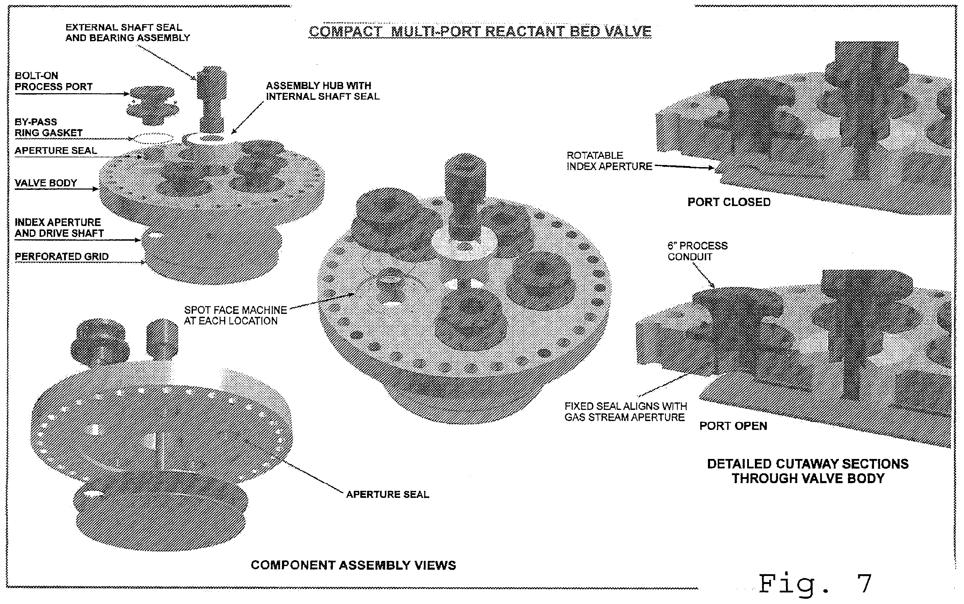

FIG. 7 shows exemplary poppet valves.

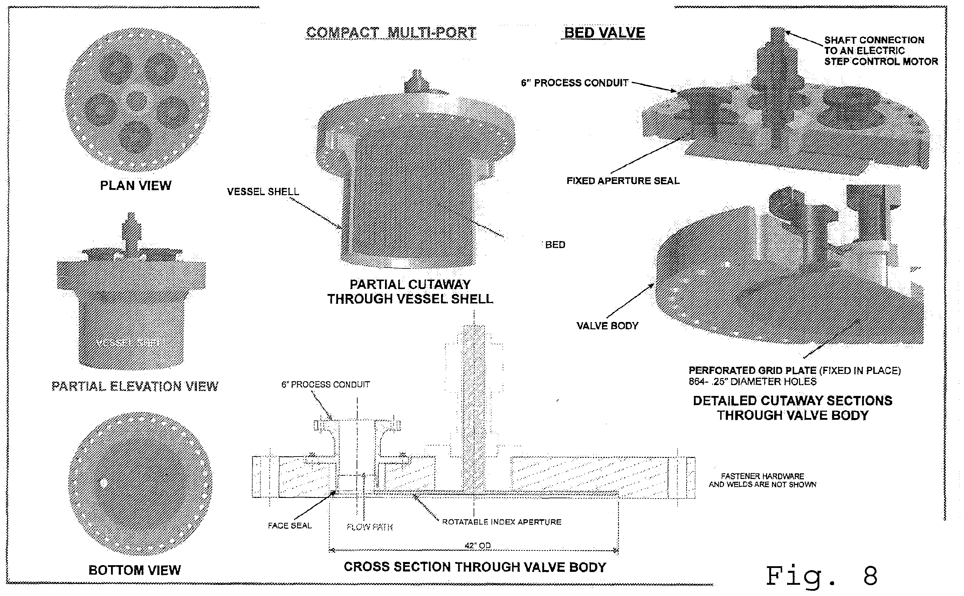

FIG. 8 shows exemplary poppet valves and adsorption beds.

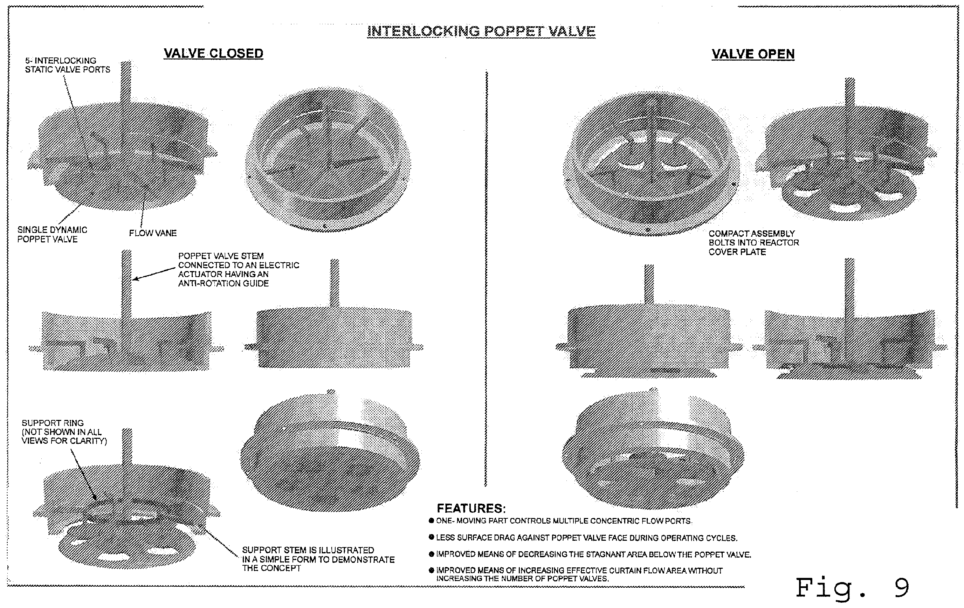

FIG. 9 shows exemplary poppet valves.

## DETAILED DESCRIPTION

Described herein is an adsorber system having reduced open flow path volume between the valves and adsorber beds with extended valve life even under high-temperature conditions may be achieved by an adsorber configuration or design that substantially integrates valves into an adsorber head. Such a design can enable the introduction and removal of overall large flow volumes with minimum pressure drop and low dead volume, and with substantially uniform flow distribution. For present purposes, open flow path volume corresponds to the volume outside of the adsorber beds that affect the gas treating along the flow path between the valves and the adsorption bed. This open flow path volume contributes little to the treatment of gases in the adsorber, but may hold large volumes of gases that should be managed with every reversal of flow direction in the operating cycle of the adsorber, either by accommodating gases of one step in the product stream of the opposing step, or by providing a means and/or fluids to sweep this gas out of the adsorber in between steps of opposing flow direction. The design of the present adsorber uses one or more valves, e.g., poppet valves comprising a disk element that modifies the opening controlled by the valve, and a stem element on which an actuating means may operate--for each process stream. Each of the valves is located substantially within the adsorber head. Multiple valves can be used for large diameter heads with manifolding outside the valves to carry feeds and products to and from the valves.

Reverse-flow adsorbers typically perform some treatment to the gases that pass through. When flow is reversed, regions near an inlet become regions near an outlet, and gas compositions or conditions that are typical of inlet conditions for one step are suddenly proximate to, and even flow into, the outlet of the subsequent step. For asymmetric reverse-flow adsorbers, gasses in alternate steps may be very different. Impurities in one step may be inappropriate for the next. For example, in steam reforming a regeneration stream may be composed mostly of nitrogen, while reforming streams may be composed mostly of hydrogen, and residual oxygen from regeneration may be problematic as a contaminant in the reforming product hydrogen. The extent of this contamination problem is minimized in the present techniques by providing an adsorber that minimizes the volume of gasses that remain in the adsorber at the end of a step. Additional steps may be taken to mitigate the extent or impact of gas carryover. The adsorber may be purged at the end of one step to eliminate problematic components. In the above-mentioned steam reforming example, inert gas may be introduced into the adsorber to sweep residual oxygen out before beginning hydrogen manufacture. Purging gases may be introduced using additional sets of the poppet valves described in this application, or may be introduced via more conventional means, such as conduits passing through the heads with more conventional process valves and manifolds located outside the head. Achieving high uniformity of bed velocity, as described herein, may be less important for purging streams than for adsorptive streams because there is reduced expectation of treating these purging streams. Alternatively, accommodation may be made in post-adsorber processing for contaminants that arise due to cycling. For example, hydrocarbon that remains in the adsorber after a steam reforming step may be managed as a combustion product contaminant by means of a catalytic converter in the flue gas to burn out remaining fuel. The magnitude of post adsorber treatments, and/or the magnitude of purging requirements is minimized by use of an adsorber, as disclosed herein, that minimizes unnecessary gas volumes residing within the adsorber.

Further described herein are one or more embodiments of an adsorber which includes: a) an adsorber body; b) a first head engaged with said adsorber body; c) a first conduit extending from outside said head to at least partially through said head; and d) a first valve in flow communication with said first conduit controlling fluid flow along a flow path extending from the first valve and through the adsorber body. In certain embodiments, the term "conduit" describes those portions of the adsorber which can provide a path for fluid flow from a location outside the adsorber body and through at least a portion of the head or a valve seat associated with the head, toward the adsorber body. In some embodiments, a conduit extends completely through the head and into the adsorber body. In certain embodiments, a conduit can include manifolds or other portions of the adsorber that guide fluid flow from outside the adsorber body towards the adsorber body. For present purposes, "flow path" can be characterized as the space within the adsorber through which feed gases and/or products flow. The volume of the flow path typically consists of i) a packed flow path volume (further characterized below) within a solids-fluids contact portion of the adsorber bed and ii) an open flow path volume (further characterized below) between the valve(s) and the adsorber bed, as well as any open flow portion within the adsorber bed. Typically, a products fluid flows into the adsorber through a controlling inlet valve and out of the adsorber through a controlling outlet valve. As the fluid traverses between inlet and outlet valves, it travels through regions where there is substantial contact with adsorber contents (called packed flow path volume) and regions where there is little contact with adsorber bed contents (called open flow path volumes). The sum of pathways within the adsorber volume that are accessible to the flowing fluid as it passes from inlet valve to outlet valve are considered herein to be the fluid "flow path", and it comprises both packed and open adsorber volumes. Typically, these two volumes sum to the total adsorber volume available for flow that is in between the valves that are on opposing ends of the flow path and are controlling fluid flow along the flow path. Conveniently, such volumes are measured and calculated with valves in closed positions. Volumes of insulating materials at the perimeter of the adsorber vessel are typically not considered to be part of either flow path volume because it is not expected that any substantial flow travel through the insulation. Volumes are computed on a bulk basis, to include solids and void spaces within adsorber components, as long as solids are reasonably proximate to fluid flow paths, preferably at a distance less than 2 centimeter (cm) from a fluid flow path.

In the embodiments of the adsorber described herein, the adsorber further comprises at least one of: e) a second head engaged with said adsorber body; f) a second conduit extending from outside the first head or the second head to at least partially through said respective head; and g) a second valve in flow communication with said second conduit controlling fluid flow along the flow path including a portion extended from the adsorber body to the second valve.

In some embodiments of the adsorber described herein, the first valve has a substantially open position when fluid flow in the flow path is in a first flow direction and a substantially closed position when fluid flow in the flow path is in a second, opposite flow direction. The adsorber can have a first valve pair on opposite sides of at least a portion of the flow path, wherein said first valve and second valve are each in a substantially open position when fluid flow in the flow path is in a first flow direction and a substantially closed position when fluid flow in the flow path is in a second, opposite flow direction.

In some embodiments of the adsorber described herein, the adsorber further comprises: h) a third conduit extending from outside the first head or the second head to at least partially through said respective head; i) a third valve in flow communication with said third conduit controlling fluid flow along the flow path including a portion extended from the adsorber body to the third valve; j) a fourth conduit extending from outside the first head or the second head to at least partially through said respective head; and k) a fourth valve in flow communication with said second conduit controlling fluid flow along the flow path including a portion extended from the adsorber body to the fourth valve. The adsorber can have a second valve pair comprising said third valve and said fourth valve on opposite sides of at least a portion of the flow path, controlling flow in the second, opposite flow direction wherein the third valve and the fourth valve are each in a substantially closed position when the fluid flow in the flow path is in the first flow direction and in a substantially open position when fluid flow in the flow path is in the second, opposite flow direction.

In certain embodiments of the adsorber described herein, the adsorber is a regenerative adsorber capable of operating with regenerative adsorber cycles which are symmetric, i.e., with the same adsorption kinetics in both directions.

In other embodiments of the adsorber described herein, the adsorber is a regenerative adsorber capable of operating with regenerative cycles which are asymmetric, i.e., an asymmetric reverse flow adsorber, in which the adsorption kinetics change according to each step in the cycle, or directional flow. In any event, asymmetric reverse flow adsorber requires that the combined forward flow and combined reverse flow differ in composition.

In other embodiments of the adsorber described herein, the adsorber comprises one or more additional valves, each in flow communication with one of said first, second, third, or fourth conduits via an additional conduit extending at least partially through said additional conduit's respective head, operating in phase with any other valves in fluid communication with said additional conduit and controlling fluid flow along the flow path including a portion extended from the adsorber body to the respective valve. In these embodiments, the term "in flow communication with" or "in fluid communication with" means in direct flow communication, i.e., without intervening valves or other closure means for obstructing flow, and also means flow communication within the head or attached manifolds, i.e., not in fluid communication by means of the adsorber flow path. Such embodiments include those where an additional conduit carrying fluid to its associated valves is located entirely within its head. For example, a conduit comes into a head from outside the head (as a primary conduit) and branches into one or more "additional conduits" (or secondary conduits) extending to different valves which control flow from the conduits through the valves to a flow path directed through the adsorber body. The same flow path can be used by flows in both the forward and reverse directions, the direction depending on which valves in the adsorber are open and which valves are closed. For present purposes, an "additional conduit" can be a primary conduit or a secondary conduit, depending on the particular adsorber design. Thus, in some embodiments two neighboring valves (typically within the same head) carry the same gas stream and operate in phase.

The term "operate in phase" as used here and elsewhere throughout the present specification relates to two or more inlet valves or two or more outlet valves opening and closing substantially together, say, with at least 80% overlap, say at least 90% overlap (with 100% overlap being identical or completely in phase). For example, considering the time interval during which a valve is in a certain state, i.e. open or closed, at least 80%, say at least 90% of that time interval is common to all valves that are "in phase." In other embodiments, tolerances on valve phasing are tighter to enable the allowance of less time in between valve changes. In such embodiments, considering the time interval during which a valve is changing state, i.e., opening or closing, at least 80%, preferably at least 90% of that time interval is common to all valves that are "in phase." In certain embodiments of the present techniques, valves that are in phase may have a range of time to begin the travel from open to close. As an example, the first valve may begin opening at time 0 and the final valve in the same phase may begin opening at some time in the future $t_0$ (typically a small fraction of the valve open time or in some embodiments of the valve opening time) and still has the same fluid flow composition and direction. Valves that are in phase may or may not open to the same lift height. For valves that are in phase, the height from the valve with the highest lift height to the valve with the lowest lift height, the lowest lift height may be down to 20% or even 50% of lift height of the valve with the highest lift height.

The first conduit may pierce the upper external surface of the head, while the "additional conduit" can be contained entirely within the head, although the actuation mechanism of the additional conduit's associated valve can, in some embodiments, pierce the head in which it resides. Alternately, this associated valve can be actuated by the same mechanism that activates the primary conduit's associated valve. During operation, these embodiments of the adsorber typically comprise four basic primary conduits for: forward flow inlet (or intake), forward flow outlet (or exhaust), reverse flow inlet (or intake), and reverse flow outlet (or exhaust), with at least one valve being associated with each. In some embodiments, more than one valve can be associated with at least one of the basic conduits. An additional valve increases the capacity of the conduit with which it is associated. Typically, valves associated with a particular primary conduit or its associated secondary conduit are operated together substantially in phase to provide a flow in one direction along a specific flow path. Certain embodiments of the adsorber utilize only primary conduits, extending outside the head, with no secondary conduits present. This improves ease of servicing the associated valves which are accessible from outside the adsorber.

In the embodiments of the adsorber of the adsorber described herein, the adsorber body comprises an adsorber bed, and the volume of the flow path consists of i) a packed flow path volume within a solids-fluids contact portion of the adsorber bed and ii) an open flow path volume between the valve(s) and the adsorber bed, as well as any open flow portion within the adsorber bed. Typically, the packed flow path volume comprises the volume in the adsorber bed that is at a distance less than 2 cm from a solids-fluid contact surface, preferably less than 1 cm from a solids-fluid contact surface. Defined as such, the packed flow path volume includes both solid and fluid volume along the flow path. Typically, it represents the bulk volume of the region of an adsorber bed containing bed packing and through which the fluids are flowing. The solids-fluids contact portion of the adsorber bed typically has a wetted area greater than 0.5 $cm^2/cm^3$ in all regions of said portion of the adsorber bed. The term "wetted area" as used herein represents the area of fluid/solid boundaries within a unit volume, divided by that unit volume. As used in the present disclosure, "wetted" simply means an interface between fluid and solid and is not meant to imply contact with a specific fluid such as water. The wetted area is also known in the art as packing surface area, and sometimes as geometric surface area, and is understood in the art to include fluid/solid boundaries in channels that are relevant to bulk flow through the bed. As such, wetted area typically does not include area within any micro pores that might be within packing or channel walls. In some embodiments, the ratio of the open flow path volume to packed flow path volume is less than 1, preferably, less than 0.5. Packed flow path volume is typically measured by calculating that volume in the flow path wherein solids-fluids contact occurs as a fluid passes through the adsorber body. Open flow path volume constitutes the remainder of volume in the flow path of the adsorber body and can include not only those spaces in the adsorber body above and below an adsorber bed, but also regions within the adsorber bed wherein solids-fluids contact does not occur, e.g., mixing zones or any other zones within the adsorber bed which lack surfaces providing intimate solids contact with the flowing fluids along the flow path. As a matter of convenience, open flow path volume is typically computed with all valves in their closed positions.

In some embodiments of the adsorber described herein, the adsorber bed comprises a fixed bed core comprising solid material capable of heat exchange. Such solid materials are selected to be durable against the physical and chemical conditions within the adsorber and can include metallic, ceramic, or other, depending on the adsorption process intended. In the embodiments of the adsorber described herein, at least one of the valves is a poppet valve comprising a disk element connected to a valve stem element. The poppet valve disk element typically has a surface facing the proximal adsorber bed surface, similar to those encountered in internal combustion engines. The surface of the disk element can be substantially round, for seating in a substantially round opening. For present purposes, the term "substantially round" can include ellipsoidal shapes such as those found in certain high performance engines. This surface is flat or profiled. In certain embodiments wherein the poppet valve disk element may have a surface that is profiled inward or outwardly relative to the opening on which it operates.

In the embodiments of the adsorber described herein, the surface of the poppet valve is substantially parallel to the proximal adsorber surface. The valves are made of a suitable material that can withstand the conditions such as temperature, pressures, adsorber maintenance schedules, etc. encountered for a specific valve location within the adsorber. For extreme high temperature conditions ceramics can be used, while metallic valves are suitable for most applications below this temperature. Depending on the adsorber design, the poppet valve opens toward the adsorber bed or opens away from the adsorber bed. Certain embodiments where the poppet valve opens toward the adsorber bed may be preferred because of ease of managing flow and pressure drop in the piping and/or head design. Certain embodiments where the poppet valve opens away from the adsorber bed may be preferred for two reasons. First, to relieve pressure in an over pressurized adsorber, e.g., where the pressure is sufficient to overcome the force generated by a biasing closure spring. This can obviate the need for separate pressure relief valves and can be useful where an adsorber is susceptible to rapid pressure buildup. Moreover, such embodiments provide less dead space in the adsorber than those where poppet valve opens towards the adsorber bed. A flow distributor is useful in such embodiments to control resulting different flow patterns and fills up additional dead space in the adsorber.

In certain other embodiments of the adsorber described herein, a gas distributor mechanism may be positioned between the valves and bed surface. An example gas distributor mechanism is described in U.S. Patent Application Publication No. 2007/0144940. The gas distributor mechanism may function to direct gas to select channels within the bed. In the embodiments, the spacing between the fully-open valves and the bed surface, is between 5 to 200% of the disk element diameter, providing sufficient space for such distributors. However, the presence of such mechanisms, as well as other adsorber features, such as bed support structures, may result in a modified spacing and/or result in the selection of bed-valve spacing at the higher end of the preferred range.

The distance during operation between the poppet valve disk element flat or profiled surface in the fully open position and the adsorber bed surface is between 5% and 200% of the disk element diameter, preferably, between 20% and 80% of the disk element diameter. The poppet valve typically comprises a poppet valve stem element, or rod, extending to a location outside its head. The valve stem can be surrounded by a bushing and/or valve guide which provides support of the valve while allowing movement along a linear path to guide and, in some cases, seals the valve during operation. In some embodiments, a valve stem seal is associated with the valve stem, e.g., rod packing as is typically seen in reciprocating compressors. For present purposes, in some instances a valve stem seal can be the same as a bushing or valve guide, although a separate valve seal is less susceptible to wear in use.

In certain embodiments of the adsorber described herein, each valve is associated with an externally accessible valve seat that fits within its respective inlet to the adsorber body and/or outlet from the adsorber body and is sealed to the head by any suitable sealing means, e.g., a gasket which is held in place by the flange attaching the valve assembly to its respective inlet. Alternatively, the valve assembly can be attached to its respective inlet via a rotatable locking mechanism, e.g. a turn-to-lock or bayonet mechanism. In other embodiments, the valve seat can be installed in the head separate from the valve assembly by use of threaded-in or pressed-in seats, or by the machining of the valve seat into the head itself.

In some embodiments of the adsorber described herein, the poppet valve comprises a linearly actuatable valve stem engageable with an actuator to open and close the valve by imparting linear motion thereto. The actuator is at least one of pneumatically actuated, hydraulically actuated, and electromagnetically actuated, in at least one direction. In other embodiments the actuator can be actuated by a camshaft, in at least one direction. An alternate return mechanism can be used, e.g., a spring, in certain embodiments, e.g., with a valve closing bias. An alternate actuation approach employs a common actuator on linearly aligned plural valves common to a particular fluid flow stream.

Poppet valves in certain embodiments can comprise a circular disk element connected to a solid cylindrical stem element. Diameter of the poppet ($D_P$) (subscript "P" for poppet valve) can be measured across the disk element. Lift, ($L_P$) can be measured as the distance that the poppet valve is translated to create open area for flow. An assembly of poppet valves can also be characterized in terms of the spacing between the valves. The spacing ($S_P$) describes the center to center spacing. Thus, if two equal diameter ($D_P$) valves have a spacing that is exactly equal to $D_P$ (i.e. 100% of $D_P$), the two poppet disk elements may just touch each other on their circumference. Valve spacing, or spacing between valves, can be characterized as the center-to-center measurement of the valves as a percent of the valve diameter ($D_P$). As the valves get closer together they tend to create a flow restriction on the inside of the adsorber, as well as a constructability issue on the outside. Moreover, large valve spacings create concerns about flow area sufficiency and flow distribution into the bed. Accordingly, suitable valve spacing should balance these opposing factors. Spacing of the valves is typically between 120% and 400% of the valve diameter, preferably, between 140% and 200%. For spacing between valves of different diameter, the average diameter may be used as divisor. This preferred spacing applies to each of the adjacent valves on a given head, regardless of whether those valves carry the same stream. It is not expected that each of the adjacent valves has identical spacing, but it is preferred that each of the adjacent valves have spacing within the ranges provided.

In certain embodiments of the adsorber described herein, the circular poppet valves associated with a particular head are substantially circular, uniform in diameter and spaced center-to-center by 120% to 400% of the average poppet valve disk element diameter, preferably, spaced center-to-center by 140% to 200% of the average poppet valve disk element diameter.

In some embodiments of the adsorber described herein, the adsorber provides at least one of: i) a valve pressure drop as fluid flows through a valve of from 1% to 100% of the adsorber internal pressure drop; ii) a ratio of total stream poppet valve flow area for one of an inlet stream and an outlet stream to adsorber flow area ranging from 1% to 30%; iii) a poppet valve diameter between minimum value $D_{PMIN}$, which is defined in the equation 1 below:

$$\left(D_{PMIN}\right)\left[inches\right] = 0.1484 + 0.4876 * D_B\left[feet\right], \tag{1}$$

$$\left(D_{PMIN}\right)\left[cm\right] = 0.3769 + 0.0406 * D_B\left[cm\right] \tag{1a}$$

where $D_B$ is flow area diameter in the units indicated in the square brackets, and a maximum value $D_{PMAX}$, which is defined in the equation 2 below:

$$\left(D_{PMAX}\right)\left[inches\right] = 1.6113 + 1.8657 * D_B\left[feet\right], \tag{2}$$

$$\left(D_{PMAX}\right)\left[cm\right] = 4.0927 + 0.1555 * D_B\left[cm\right] \tag{2a}$$

where $D_B$ is flow area diameter in the units indicated in the square brackets; iv) $L_P/D_P$, (the ratio of valve lift to poppet diameter) ranges between 3% and 25%; and v) valve lift times of at least 50 milliseconds. As may be appreciated, the poppet flow area $A_{PFI}$ relates to the diameter, the lift and the number of valves, and is defined by the equation 3 below:

$$A_{PFI} = N_{FI} * \pi * D_{PFI} * L_{PFI} \tag{3}$$

where $FI$ is "forward flow inlet," A is area, $N$ is number of valves, $D$ is diameter, and $L$ is lift.

Typically, the adsorber described herein provides at least one of: i) a valve pressure drop as fluid flows through a valve of from 5% to 20% of the adsorber internal pressure drop; ii) a ratio of total stream poppet valve flow area for one of an inlet stream and an outlet stream to adsorber flow area ranging from 2% to 20%; iii) a poppet valve diameter between minimum value $(D_{PMIN})[inches]=0.1484+0.4876*D_B[feet]$, where $D_B$ is flow area diameter in feet, and maximum value $(D_{PMAX})[inches]= 1.6113 + 1.8657 * D_B [feet]$, where $D_B$ is flow area diameter in feet; iv) $L_P/D_P$, (the ratio of valve lift to poppet diameter) ranges between 5% and 20%; and v) valve lift times between 100 and 500 milliseconds. Further, the ratio of total stream poppet valve flow area for a particular inlet stream or outlet stream to adsorber flow area is between 1% to 30%, preferably, between 2% and 20%.

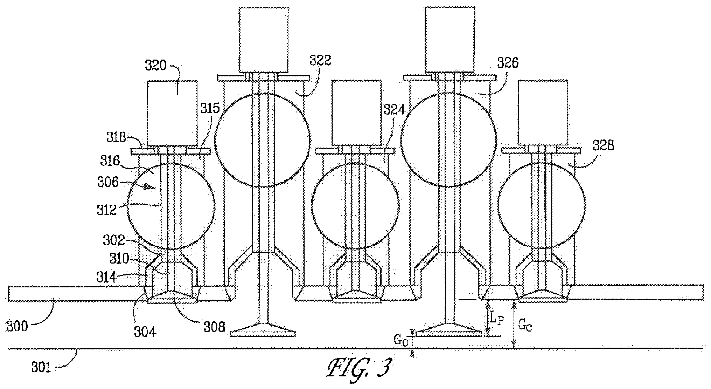

The adsorber in certain embodiments can also be characterized in terms of the distance, or gap, that is created between the poppet and the bed packing. For instance, open gap $(G_0)$ is the distance between the adsorber bed surface and the flat or profiled surface of the poppet that is facing the proximal adsorber bed surface when the valve is open, and define the closed gap $(G_C)$ as the distance when the valve is closed. In many embodiments (such as illustrated in FIG. 3) the difference between these values $(G_C - G_O)$ is equal to lift, $L_P$.

The use of poppet valves enables high flow rates by means of the large flow areas that are provided when the valves are opened. Flow area is generally known as the product of the valve circumference ($\pi * D_P$) and valve lift ($L_P$). In poppet valves, as in other valves, there is some reduction of pressure (called pressure drop) that occurs as fluid flows through the valve. Similarly, there is a pressure drop that occurs as fluid flows through the flow path comprising the adsorber internal contents between the valves. A suitable range for the ratio of valve pressure drop to total adsorber pressure drop enables the balancing of opposing factors, with low valve pressure drop preferred for flow distribution within the bed, and high valve pressure drop preferred for high flow rates and smaller/fewer valves. Thus, valve pressure drop is typically between 1% and 100% of the adsorber internal pressure drop, preferably, between 5% and 20% of adsorber internal pressure drop.

Many applications of the poppet valve reverse flow adsorbers are advantageously specified in terms of the poppet valve flow area for each stream as percent of the adsorber flow area, with each stream's poppet valve flow area being calculated from the number and character of the poppet valves on that stream, and with adsorber flow area calculated as the cross-sectional area of the adsorber bed that is accepting or discharging the flow. For example, considering a set of $N_{FI}$ poppet valves (where $FI$ = forward inlet) that are serving the stream that is the flow inlet for the forward flow direction, the total poppet valve flow ($A_{PFI}$) area is $N_{FI} * \pi * D_{PFI} * L_{PFI}$. For a typical cylindrical adsorber, with flow along the cylinder's axis, $D_B$ is the bed diameter, and consequently ¼ $\pi D_B^2$ is the adsorber flow area. A typical suitable range for the ratio of total stream poppet valve flow area to adsorber flow area balances opposing factors as does pressure drop. The number and size of valves for each particular inlet or outlet stream can be chosen to provide a ratio of poppet valve flow area for a particular inlet or outlet stream to adsorber flow area between 1% to 30%, preferably, between 2% and 20%. In other words, flow through the poppet valve flow area for forward flow inlet or reverse flow outlet can be between 1% to 30%, preferably, between 2% and 20%, as a percentage of adsorber flow area. Many applications of the reverse flow adsorber in some of the embodiments are advantageously specified in terms of the specific poppet valve diameter and lift. Poppet valve diameter ($D_P$) is advantageously specified in proportion to the diameter ($D_B$) of the adsorber flow area. For non-cylindrical adsorber flow area, an equivalent diameter may be computed as $(4A/\pi)^{1/2}$. A suitable range of diameters satisfactorily balances the opposing needs for high flow rates, uniform flow distribution, and minimal complexity. Preferred poppet diameter is not a simple fraction of diameter, but typically varies continuously as bed diameter changes. The range of poppet valve diameters can be between a minimum value ($D_{PMIN}$) and a maximum value ($D_{PMAX}$), wherein these minimum and maximum values are expressed as a function of bed diameter in the following equations: $D_{PMIN}[in]= 0.1484+0.4876*D_B[ft]$ and $D_{PMAX}[in]= 1.6113+1.8657*D_B[ft]$.

A suitable range for the ratio of valve lift ($L_P$) to poppet diameter ($D_P$) balances the factors of valve pressure drop, valve efficiency, bed flow uniformity, and improved mechanical complexity. Valve lift ratio ($L_P/D_P$) is typically between 3% and 25%, preferably, between 5% and 20%.

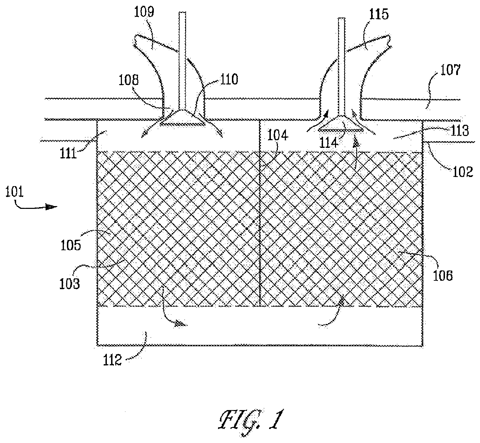

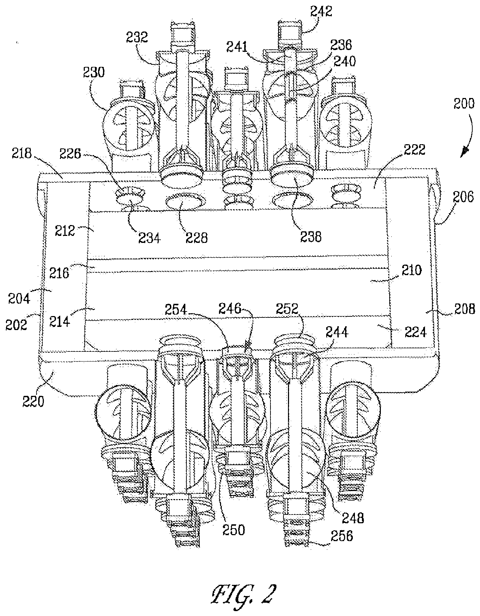

Further to the above-described dimensions for poppet flow area, diameter, and lift, poppet flow area can be related to diameter, lift, and number of valves by the following geometric equation: $A_{PFI} = N_{FI} * \pi * D_{PFI} * L_{PFI}$ (example for one stream; $FI$ subscript represents forward inlet). The number of valves suitable in an adsorber is the result of adsorber design according to specifications made for other parameters. Design according to the specification provided herein results in valve numbers that balance several opposing objectives. Use of fewer valves leads to those valves being larger to satisfy flow area requirements. Larger valves require larger lifts and larger valve-bed gaps ($G_0$), thus increasing the distance between the adsorber head and the adsorber bed resulting in more open flow path volume. Too many valves in themselves add to adsorber costs in addition to requiring more intricate manifolds. Exemplary designs incorporating these features can be found in Examples 1 and 2, as well as FIGS. 1 and 2.

Adsorbers in one or more embodiments of the present disclosure allow for an unexpectedly small gap in between the valve assembly and the entry into the adsorber bed. Minimizing this gap advantageously minimizes adsorber open flow path volume which is deleterious to reverse-flow adsorber efficiency. Open flow path volume is associated with the space between the adsorber beds and the valves. Open flow path volume is lacking of any substantial amount packing, or heat transfer solids, and thus provides essentially no contribution to the gas stream treating that occurs within the adsorber. However, fluids within the open flow path volume are still within the flow path and thus may be transferred from one step to the next when the flow direction is reversed or else may require purging fluid to be recovered before the flow direction is reversed. One or more embodiments of the adsorber described herein reduce open flow path volume resulting in lower purging requirements and/or lower product losses from one step to the next. Critical heat transfer properties of the packing used are well known in the pressure swing reforming art and result in unexpected flow distribution properties when poppet valves are used and positioned as specified in the present invention. Distribution space, characterized as the height between the open poppet valve and the adsorber bed surface, may be minimized in the adsorber. The bed-to-poppet height ($G_0$) for inlet valves is typically from 20% to 80% of the diameter of the poppet. Because good flow distribution is less of a concern for outlet or exhaust valves, the minimum bed-to-poppet height can be less than for the inlet or intake valves. Typically, the bed-to-poppet height ($G_0$) for outlet valves ranges from 5% to 80% of poppet diameter. These values represent attractive minimum gap dimensions. Larger gaps may be used to accommodate other adsorber internals, such as bed supports or fuel distribution systems.

Valve lift times in a representative example of an industrial diesel engine are approximately 0.004 seconds (4 milliseconds). Typically these valves are opened utilizing a cam shaft, and the valve opens over a certain crank angle, typically going from fully closed to fully open in approximately 25 degrees of crankshaft rotation. The valves that are used in the adsorber may open utilizing a pneumatic actuator and can be held in the fully open position for a length of time before closing. The opening and closing time for the valves is based on the total cycle time for the adsorber. Poppet valves as used in the present invention have lift times that are unanticipated in the poppet valve engine art. Valve opening timing is distinguished because the rate of valve opening controls velocity changes within a reverse-flow bed system, and these changes impact the bed performance and durability. Valve lift times that are too fast, such as those used in engines, are undesirable in the present techniques because such times result in too-rapid changes in bed velocity. Typically, the lift times of the valves may be greater than 50 milliseconds, e.g., between 50 and 1000 milliseconds, preferably between 100 and 500 milliseconds. The duration of a complete cycle is defined as $\tau$, and the total lift of the valve is defined as $\lambda$. Typically, a process employing adsorbers uses a set of two or more adsorbers such that one or more adsorbers are operating in the forward direction while one or more other adsorbers are operating in the reverse direction. A single adsorber may remain in a forward or reverse flow step for a duration of about 15% to about 80% of the total cycle time ($\tau$), depending on the number of adsorbers and design of the cycle. The lift times of the valves can range from 0.01 r and 0.05 $\tau$.

As earlier noted, in a second aspect of the present disclosure, an adsorber comprieses: a) an adsorber body partially enclosing an adsorption and/or heat exchange region comprising two substantially opposing open ends; b) a first head capping one end of the adsorber body; c) a second head capping the opposing end of the adsorber body; d) a fixed bed comprising a region proximal to the first head, a region proximal to the second head and a central region disposed therebetween, which fixed bed is disposed within the adsorber body and comprises solid material capable of promoting adsorption and/or heat exchange with a gas stream; e) at least one gas stream inlet associated with the first head opening a pathway through the first head and into the adsorber body and at least one gas stream outlet associated with the second head opening a pathway from the adsorber body and through the second head; f) at least one inlet poppet valve controlling the gas stream inlet and integrated with the head associated with the inlet, the inlet poppet valve comprising a linearly actuatable valve stem; g) at least one outlet poppet valve controlling the gas stream outlet and integrated with the head associated with the outlet, the outlet poppet valve comprising a linearly actuatable valve stem; and h) at least one actuator engageable with the linearly actuatable valve stem of f) and/or g) providing valve opening and closing by imparting linear motion to the poppet valve to allow gases to pass from outside the adsorber to inside the adsorber body, and from inside the adsorber body to outside the adsorber so as to provide changeable flow operation.

In certain embodiments of this aspect, the adsorber further comprises i) at least one gas stream inlet associated with the second head opening a pathway through the second head and the adsorber body and at least one gas stream outlet associated with the first head opening a pathway through the adsorber body and the first head, with associated inlet poppet valve(s) or other inlet flow control means, outlet poppet valve(s) and actuator(s) analogous to f), g) and h).

A third aspect, earlier noted, of the present disclosure relates to a process for rapid stream-switching of at least two streams in a reverse-flow adsorber comprising an adsorber body partially enclosing an adsorption and/or heat exchange region comprising two substantially opposing open ends with a first head capping one end of the adsorber body, a second head capping the opposing end of the adsorber body, a fixed bed disposed within the adsorber body comprising solid material capable of promoting adsorption and/or heat exchange with a gas stream. The process comprises: i) introducing from one or more inlet gas sources at least one first gas stream to at least one gas stream inlet associated with the first head through the first head and into the adsorber body and withdrawing a treated first gas stream from the adsorber body and through the second head to at least one gas stream outlet associated with the second head; wherein said introducing and withdrawing are controlled respectively by at least one intake poppet valve located in the first head and at least one exhaust poppet valve located in the second head; and ii) introducing from one or more inlet gas sources at least one second gas stream to at least one gas stream inlet associated with the second head through the second head and into the adsorber body and withdrawing a treated second gas stream from the adsorber body and through the first head to at least one gas stream outlet associated with the first head, wherein said introducing and withdrawing are controlled respectively by at least one intake poppet valve located in the second head and at least one exhaust poppet valve located in the first head.

In one or more embodiments, the apparatus cycles at a rate of from 0.1 to 20 cycles per minute, preferably 1 to 15 cycles per minute, and pressure swings at total pressures ranging from 0 to 5000 kPa. The adsorber described herein is able to reliably perform in these environments.

An adsorber not forming part of the present invention is shown in FIG. 1 below. FIG. 1 is an illustration of an asymmetric reverse flow adsorber with a single head and associated valve assembly. The adsorber **101** comprises an adsorber body **102** with an adsorber bed **103** having a substantially gas impermeable partition **104** dividing the adsorber bed into left side adsorber bed **105** and right side adsorber bed **106**. The upper portion of the adsorber bed is capped by a single head **107** up to which the partition **104** extends. Inlet opening **108** in the head **107** is positioned above the left side adsorber bed **105** and fed by a first conduit **109**. A conduit, such as conduit **109** and **115** may be a tube or other fluid conveying means provided as a portion of or extension from a manifold (not shown). A conduit, such as conduit **109** and **115** may extend from outside head **107** to at least partially through said head. The first conduit **109** may extend from outside the adsorber body **102** and through an opening in the head **107** towards the left side adsorber bed **105**. A forward flow inlet poppet valve **110** is seatable within the head contacting a separate valve seat inserted within the head (not shown) or the head itself when seated, and controls fluid flow from outside the head into the left upper open space **111** above the left side adsorber bed **105**. The inlet poppet valve **110** is upwardly extended in the closed retracted position and is open when downwardly extended. When the inlet poppet valve **110** is open, fluid flows forward from the first conduit **109** through the inlet poppet valve **110** into a flow path via the open space **111** through the left side adsorber bed **105** into a lower common open space **112** below the adsorber bed **103** and then to the right side adsorber bed **106** and right upper open space **113** from which the flow path extends to forward flow outlet poppet valve **114** is seatable within the head **107** and contacts a separate valve seat (not shown) or the head itself when seated. The outlet poppet valve **114** which is seated within the head **107** controls flow from the right upper open space **113** to a second conduit **115** extending from the outlet poppet valve **114** through the head to a location outside the head. Like the inlet poppet valve **110,** the outlet poppet valve **114** is upwardly extended in the closed retracted position and is open when downwardly extended. (An alternate arrangement can be made wherein the inlet poppet valve **110** and outlet poppet valve **114** are downwardly extended in the closed position and extend upwardly away from the adsorber bed in the open position.) The second conduit **115** can be a tube or other fluid conveying means provided as a portion of or extension from a manifold (not shown)). The second conduit **115** may extend from outside the adsorber body **102** and through an opening in the head **107** towards the right side adsorber bed **106** and may be used to conduct products from the adsorber bed **103** to a location outside the adsorber **101.**

During operation, the inlet poppet valve **110** and outlet poppet valve **114** are substantially in phase, i.e., they open and close together substantially at the same time. Thus, when open they allow for fluid flow from the first conduit **109** to the second conduit **115**. A corresponding set of valves and conduits (not shown) can provide a reverse flow along the flow path through the adsorber bed in the reverse direction, with a reverse flow inlet valve over the right side adsorber bed **106** and a reverse flow outlet valve over the left side adsorber bed **105**. The second set of valves also typically operates substantially in phase with regard to each other, while operating in substantially opposite phase with the first set of valves. Thus, the first and second valves (the first valve pair) are simultaneously open while the third inlet poppet valve and fourth outlet poppet valve (the second valve pair) are closed when flow is in the forward direction (from the left side of the adsorber to the right). The first and second valves of the first valve pair are then closed while the second valve pair is open to permit flow in the reverse direction.

In an alternative embodiment, the advantages of employing a particularly symmetric valve pattern may dictate a valve diameter that is larger than the DPMAX that would be chosen without considering symmetry. For example, one may use a hexagon pattern of six or seven valves associated with the circular end of a cylindrical adsorber bed design. If center to center valve spacing is $\geq$ 120% of valve diameter, then valves could be as large as 27.8% of reactor diameter. Further, when center to center valve spacing is $\geq$ 140% of valve diameter, then valves could be as large as 23.8% of adsorber diameter. As an example, an adsorber bed that is 96 inches (2.44 meters) in diameter may benefit from a valve that is 22.85 or 26.7 inches (58 or 67.8 cm) in diameter. For such embodiments, the DPMAX may be a larger proportion of adsorber diameter, as given by the equation (DPMAX) [inches] = 1.6113 + 2.858*DB [feet] or (DPMAX) [cm] = 4.0927 + 0.238*DB [cm]. As may be appreciated, other variations may also be envisioned within the scope of the present techniques.

Asymmetric reverse flow operation typically requires that the composition of gas flowing in the forward direction differ from the composition of gas flowing in the reverse direction. For example, the gas flowing through the intake valve in the forward direction differs from the composition of gas flowing through the intake valve in the reverse direction.

An exemplary embodiment of the present adsorber, as applied to a large-scale adsorber having multiple valves and conduits, is shown in FIG. 2 below. FIG. 2 is an illustration of an asymmetric reverse flow adsorber with two opposed heads and associated valve assemblies according to an embodiment of the present invention. The adsorber **200** comprises a cylindrical wall and cylindrical insulation layer depicted in the cross-sectioned FIG. as left side wall **202,** left insulation layer **204,** right side wall **206,** and right insulation layer **208.** An adsorber bed **210** comprises an upper adsorber bed portion **212,** a lower adsorber bed portion **214** with a mixing zone **216** which can contain a mixing structure. The adsorber is capped with an upper head **218** and a lower head **220,** resulting in an upper open zone **222,** and lower open zone **224** which open zones are comprised substantially of open flow path volume. Such open flow path volume in reverse flow adsorbers contains gas that may cross over from the forward flow step of the cycle to the reverse flow step, and vice versa, if not properly managed, for example by flushing between these steps of the cycle. This minimizing of open flow path volume advantageously reduces the volumes which to be managed during a cycle, reducing cycle time and increasing efficiency. The upper head **218** and lower head **220** contain openings in which valve structures can be inserted. The upper or lower open flow path volume between the head and adsorber bed can also contain distribution lines (not shown) which directly introduce fuel for combustion in the adsorber **200.**

The upper head **218** contains various openings, such as exemplary openings **226** and **228** (the latter opening depicted as occupied by a poppet valve) for forward flow inlet manifold **230** and reverse flow outlet manifold **232.** Disposed through the manifolds and controlling the openings are forward flow inlet valve **234** and reverse flow outlet valve **236.** The forward flow inlet valve **234** and reverse flow outlet valve **236** are poppet valves comprising (as depicted in the case of **236**) a disk element **238** connected to a stem element **240** which can be positioned within a bushing or valve guide **241.** The stem element **240** is connected to an actuating means **242** which imparts linear motion to the valve. As may be appreciated, the openings **226** and **228** and associated manifolds **230** and **232** may form conduits extending from outside the upper head **218** to at least partially through the upper head **218** for fluid flow. This exemplary embodiment advantageously has an independent actuating means associated with each valve which minimizes actuating means failure to a single valve. Alternately, a single actuating means can be provided that controls plural valves. In general, the openings and inlet valves for inlet manifolds are of smaller diameter than those for outlet manifolds, given that the gas volumes passing through the inlets tend to be lower than product volumes passing through the outlets. In FIG. 2, the forward inlet valves are depicted in an open position while the reverse outlet valves are depicted in the closed position.

A similar manifold and valve arrangement is associated with the lower head **220.** The lower head **220** contains various openings, such as exemplary openings **244** and **246** for forward flow outlet manifold **248** and reverse flow inlet manifold **250.** (Opening **246** is partially obscured inasmuch as the reverse flow inlet valve **254** is depicted in the closed position.) The "tag" to **246** is an arrow, pointing through the reverse flow inlet valve **254** and into the opening **246.** The openings **244** and **246** and associated manifolds **248** and **250** may form conduits extending from outside the lower head **220** to at least partially through said lower head **220** for fluid flow. Disposed through the manifolds and controlling the openings are forward flow outlet valve **252** and reverse flow inlet valve **254.** Again, the forward flow outlet valve **252** and reverse flow inlet valve **254** are poppet valves comprising a disk element connected to a stem element which can be positioned within a bushing or valve guide. As shown for forward flow outlet valve **252,** the stem element is connected to an actuating means **256** which imparts linear motion to the valve, similar to the discussion above. The embodiment advantageously has an independent actuating means associated with each valve which minimizes actuating means failure to a single valve. Alternately, a single actuating means can be provided that controls plural valves operating in phase, preferably, a group of plural reverse flow inlet valves. Part of the adsorber valve design includes sealing the adsorber, specifically around the valves, to eliminate release of product gases. Suitable seals include rod packing, e.g., reciprocating compressor type seals for the stem elements or shafts of the valves. Valve actuator means provides adequate force and lift times, and meets the design life of the adsorber. Typically, the actuator means are pneumatically controlled actuators that are spring returned and are biased to closure in the event of actuator failure.

In FIG. 2, the reverse flow outlet valves **236** are depicted in the closed position while the forward flow inlet valves **234** are depicted in an open position. Thus, FIG. 2 depicts gas in forward flow from the forward flow inlet manifold **230** of the upper head **218,** through the adsorber bed **210** and into the forward flow outlet **244** of the lower head **220.** Both reverse flow valves (reverse flow outlet valve **236** and reverse flow inlet valve **254** are closed at this time. In the next phase of the cycle the forward flow inlet valves **(234** and **252)** close and the reverse flow inlet valve **254** of the lower head opens along with the reverse flow outlet valve **236** of the upper head **218,** promoting reverse flow of gas from the lower head **220** through the adsorber bed **210** and out the upper head **218.**

Typically, the forward flow valve pairs, with each valve pair consisting of a forward flow inlet valve and forward flow outlet valve operate together in phase with each member of the pair. A forward flow valve pair can be located on their respective heads directly opposite each other with stems parallel to the adsorber sides and driven by a common actuator means. Similarly, the reverse flow valve pairs, with each valve pair consisting of a reverse flow inlet valve and a reverse flow outlet valve operate in phase with each other and can, if desired, be located in their respective heads directly opposite each other with their stems parallel to the adsorber sides and driven by a common actuator means. Generally, forward flow valve pairs operate directly opposite with reverse flow pairs, such that when a forward flow valve pair is open, the reverse flow valve pair is closed, and vice versa. Where each valve on the adsorber has its own actuator means, the adsorber can continue to operate if only a single valve fails and allows the removal and replacement of a single valve without the need to disassemble the entire adsorber. Alternately, plural valves that control the same feed/product stream can be driven by a common actuator.

The adsorber bed **210** comprises an upper adsorber bed portion **212,** a lower adsorber bed portion **214** with a mixing zone **216** which can contain a mixing structure. The lower adsorber bed may also include structures that support the weight of the bed (not shown). Typical adsorber bed materials include honeycomb monoliths, which have straight channels to minimize pressure drop and enable greater adsorber length. Honeycomb monoliths used in the adsorber typically have channel densities that range from about 16 channels per $inch^2$ (channels/$in^2$) to about 3200 channels/$in^2$ (2.5 - 500 channels/$cm^2$). Alternatively, packing for one or more portions of beds 212 and 214 may be more tortuous, such as foam monoliths and packed beds. Typical foam monoliths for the present techniques have pore densities that range from about 5 ppi (pores per inch) to about 100 ppi (i.e. 2-40 pore/cm). Typical packed beds for the present techniques have packing with wetted surface area that range from about 60 per feet ($ft^{-1}$) to about 3000 $ft^{-1}$(i.e. 2 - 100 $cm^{-1}$). The total flow path in FIG. 2 is represented by the volumes in open zones **222** and **224** as well as volumes in beds **212** and **214** and in mixer **216.** Open flow path volume is comprised mostly of the open zones **222** and **224,** while packed flow path volume is comprised mostly of the bed and mixer zones **212, 214,** and **216.**

The integration of large poppet valves into the heads of the adsorber greatly reduces, relative to conventional valving, the amount of unproductive volume between the adsorber bed and the valve. Moreover, this embodiment is readily constructed and operated, with a sufficient number of valves arranged on an adsorber head to provide sufficient flow area to allow operation at desired pressure drop, typically a valve pressure drop between 1% and 100% of the adsorber internal pressure drop, preferably, between 5% and 20% of adsorber internal pressure drop. Adsorber internal pressure drop, in the context of FIG. 2, may comprise the difference in pressure between the upper open zone **222** and the lower open zone **224.** Valve pressure drop, in the context of FIG. 2, comprise the difference in pressure between a manifold (e.g. **230**) and the open zone (e.g. **222**) just beyond an open valve (e.g. **234).** As stated earlier, valve pressure drop is typically between 1% and 100% of the adsorber internal pressure drop, preferably, between 5% and 20% of adsorber internal pressure drop. Moreover, flow emerging from the valves can be adequately distributed over the entire width of the bed. This embodiment can be used with an adsorber bed substantially comprising parallel channels in the direction of flow as noted in the preceding paragraph, e.g., honeycomb monoliths which can eliminate any radial dispersion of streams. Advantaged reverse-flow adsorber technology provides high velocity uniformity across the bed cross-section, for example as quantified via the standard deviation of velocity so that residence times in axial paths through the bed may be similar. In particular, reverse flow adsorber technology used for pressure swing reforming requires a high degree of flow distribution in the open volume outside of the adsorber bed packing, because the parallel channel components, e.g., those in honeycomb structures, limit further redistribution of flow once inside the bed. The present techniques are particularly useful in providing a head-integrated poppet valve adsorber that distributes flow from integrated poppet valves into a parallel channel honeycomb bed packing.

FIG. 3 illustrates a detailed vertical cross-section of the adsorber upper head **300** showing associated integral valve assemblies in place within the manifolds, above an adsorber bed surface **301.** Forward flow inlet valve assembly **302** comprises valve seating means **304** which interfaces between the head and valve assembly and is attached into an opening in the head to provide a forward inlet opening in the head. The forward flow inlet valve assembly **302** further comprises a poppet valve **306** having a disk element **308** connected to a stem element **310** which is surrounded in part by a hollow cylindrical valve guide member **312** from which extend support arms **314** which connect the valve seating means to the valve guide means. The forward flow inlet valve assembly **302** extends through a vertical manifold tube **315** acting as a delivery tube to the valve opening. The vertical manifold tube **315** intersects with a horizontal manifold tube **316** through which inlet gas is conducted to the valve and therethrough ultimately introduced to the adsorber bed **301.** Fluid flows from the horizontal manifold tube **316** and vertical manifold tube **315** at least partially through the opening in the head **300** which provides a conduit for fluid flow from outside head **300** to at least partially through said head, with flow continuing past the valve seating means **304** when the poppet valve **306** is in an open position. The conduit may include the valve seating means **304,** hollow cylindrical valve guide member **312,** vertical manifold tube **315,** horizontal manifold tube **316,** valve actuating member **320** and/or assembly's collar **318** for inlet valve assembly **302.** The vertical manifold tube **315** is capped by the valve assembly's collar **318** through which extends the valve guide member **312** and valve stem member **310.** Atop the collar **318** is a valve actuating member **320** which pneumatically controls the linear movement of the valve stem element and thus the passage of fluid through the forward flow inlet opening that is surrounded by the valve seating means **304.** A larger diameter reverse flow outlet valve assembly **322** is attached at a reverse flow outlet opening in the upper head. Valve assemblies **324, 326,** and **328** represent additional valve assemblies, namely, a forward flow inlet valve assembly **324,** a reverse flow outlet valve assembly **326,** and another forward flow inlet valve assembly **328,** respectively. Each additional valve assembly is analogous to the forward inlet valve assembly described above. Forward flow inlet valve assemblies **320, 324,** and **328** are shown with their valves in the closed position while reverse flow outlet valve assemblies **322** and **326** are shown with the valve in the open position, showing $L_P$, or lift, $G_0$, or open gap, and $G_C$, or closed gap.

Each valve assembly comprises, a valve seat, a disk that mates up with the valve seat, a stem that is attached to the disk, a guide for the stem, an attachment structure from the valve seat to the guide, linear bearings, seal systems, and an actuator. The valve seat may be attached to the guide and assembled prior to installing into the head, may be pressed or threaded into the head, or may be machined into the head, as in the case where an integral head that included the manifold and valves may be utilized. The disk may be circular, elliptical, hemispherical, or any desired shape that allows for the attachment of a stem to actuate the disk. The circular or elliptical disk may be the most efficient shape. The guide for the valve stem includes the linear bearings and the seals for the valve stem. The actuator may be an electromagnetic actuator, pneumatic actuator, hydraulic actuator, or a cam shaft that rotates at the rate desired for the process which is dependent on cycle times. The actuator may impart motion to several valves simultaneously or may impart motion to each valve individually. In the case where the valve seat is attached to the guide, the valve assembly, which may include the components listed above, can be readily removed from the adsorber head as a unit facilitating the repair of the adsorber should valve assembly replacement be necessary. The assembly can be attached into the adsorber head by a bolt on flange at the top of the manifold. Alternatively, a turn-to-lock type (or bayonet) system where the valve assembly is inserted and the valve assembly is turned until it locks into place. This, however, is less preferred for larger valves and higher temperature streams.

In alternate embodiments, each integral valve assembly comprises, a valve seating means securable to the opening in the head, support arms securing the valve seating means to a hollow valve guide, a valve stem element within the valve guide secured to a disk member whose linear adjustment varies flow into the adsorber, a collar surrounding the valve guide which collar is securable to the upper opening of a vertical manifold tube, atop which is positioned the actuating member which imparts linear movement to the valve stem element to which it can contact. Each integral valve assembly can be readily removed from the adsorber head as a unit, facilitating the repair of the adsorber should valve assembly replacement be necessary. Valve seat assemblies are typically attached to the head via a flange at the top of the manifold, with the integral assembly being lowered down into position through the manifold. This arrangement requires the valve assembly to be sealed in three places. The flange is sealed with a gasket, the valve stem is sealed using a reciprocating compressor seal, and the valve seat to the head of the adsorber is sealed using a lip seal. An alternate means to attach and seal the valve assembly into the adsorber may be a turn-to-lock type (or bayonet) system where the assembly is inserted and the entire assembly is turned until it locks into place. This, however, is less preferred for larger valves and higher temperature streams. In some embodiments of the invention, particularly where the valve opens into the manifold rather than into the adsorber, or where the head is removable for installation and removal of the valve, the valve seat is installed in the head separate from the valve assembly, by use of threaded-in or pressed-in seats, or by the machining of the valve seat into the head itself. Non-integral valve assemblies like those in an automotive type engine can also be used.

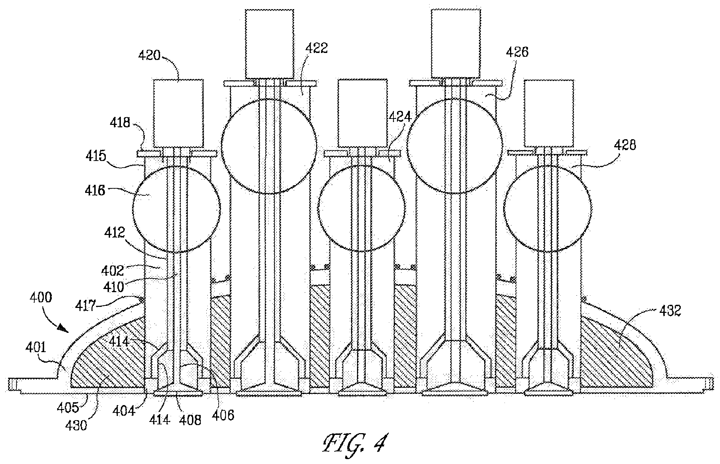

FIG. 4 depicts a detailed vertical cross-section of a dished, substantially elliptical upper head **400** along with associated integral valve assemblies in place within an associated manifold. The exterior of the head is defined by a substantially elliptical external wall **401** which is of sufficient thickness to contain operating pressures encountered during use. Forward flow inlet valve assembly **402** comprises valve seating means **404** which is attached at a forward inlet opening in the flat floor **405** of the head which abuts the adsorption zone of the adsorber and provides a barrier. This flat floor **405** provides a surface on which to attach the valve seating means **404**, but does not operate as a pressure boundary. The forward flow inlet valve assembly **402** further comprises a poppet valve **406** having a disk element **408** connected to a stem element **410** which is surrounded in part by a hollow cylindrical valve guide member **412** from which extend support arms **414** which connect the valve seating means to the valve guide member **412**. The forward flow inlet valve assembly **402** extends through a vertical manifold tube **415** acting as a delivery tube to the valve opening in the floor **405**. The vertical manifold tube **415** intersects with a horizontal manifold tube **416** through which inlet gas is conducted to the valves and therethrough ultimately introduced to the adsorber bed (not shown). Fluid flows from the horizontal manifold tube **416** and vertical manifold tube **415** at least partially through the opening in the flat floor **405** which provides a conduit for fluid flow past the valve seating means **404** when the poppet valve **406** is in an open position. This conduit extends from outside head **400** to at least partially through said head, and may include all or parts of the valve seating means **404,** valve guide member **412**, vertical manifold tube **415,** horizontal manifold tube **416,** valve actuating member **420** and/or assembly's collar **418** for inlet valve assembly **402**. The vertical manifold tube **415** can be secured to the elliptical external wall **401** by welds **417** and is capped by the valve assembly's collar **418** through which extends the valve guide member **412** and valve stem member **410.** Atop the collar **418** is a valve actuating member **420** which pneumatically controls the linear movement of the valve stem element **410** and thus the passage of fluid through the forward inlet opening that is surrounded by the valve seating means **404**. A larger diameter reverse flow outlet valve assembly **422** is attached at a reverse flow outlet opening in the upper head. Valve assemblies **424, 426,** and **428** represent additional valve assemblies, namely, a forward flow inlet valve assembly **424,** a reverse flow outlet valve assembly **426,** and another forward flow inlet valve assembly **428.** Each valve assembly is similar to the forward inlet valve assembly described above in detail. The open space between the external elliptical wall **401** and the flat floor of the head **405** and between the vertical manifold tubes can be filled with a suitable space filling solid, e.g., a low porosity material with adequate temperature resistance, preferably a low porosity ceramic material, to avoid the undesired buildup of gases within the head itself, as shown at **430** and **432**.

In other embodiments, the adsorber may include other configurations in addition to the head and adsorber body or shell, noted above. For instance, the adsorber body may be formed of one unit or different components, which form an adsorption zone within the adsorber body. Further, the one or more poppet valve assemblies may be coupled to the directly to adsorber body or may be coupled to other conduits that are coupled directly to the adsorber body or the head. Accordingly, in one embodiment, an adsorber may include an adsorber body, wherein the adsorber body forms a adsorption zone within the adsorber body; a packing material disposed within the adsorption zone; and one or more poppet valve assemblies coupled to the adsorber body and in flow communication with the adsorption zone and controlling fluid flow between a location external to the adsorber body and within the adsorption zone. The adsorber body may be one unit, different components, or may be a head and a shell configuration. The operation of the adsorber and the poppet valve assemblies may operate as discussed above.

The packing material may include different types of packing material, such as pebbles or engineered packing material, as noted above. If the packing material is engineering packing material it may include material provided in a specific configuration, such as a honeycomb, ceramic foams or the like. These engineered packing materials have a higher geometric surface area ($a_v$), as compared to other bed structures. The use of this type of packing allows for higher gas hourly space velocity, higher volumetric adsorber productivity, higher thermal efficiency, and smaller, more economical adsorbers.

The provided adsorbers are useful in adsorptive kinetic separation processes, apparatus, and systems for development and production of hydrocarbons, such as gas and oil processing. Particularly, the provided processes, apparatus, and systems are useful for the rapid, large scale, efficient separation of a variety of target gases from gas mixtures.

The provided adsorbers described above are useful in swing adsorption processes. Non-limiting swing adsorption processes include pressure swing adsorption (PSA), vacuum pressure swing adsorption (VPSA), temperature swing adsorption (TSA), partial pressure swing adsorption (PPSA), rapid cycle pressure swing adsorption (RCPSA), rapid cycle thermal swing adsorption (RCTSA), rapid cycle partial pressure swing adsorption (RCPPSA), as well as combinations of these processes such as pressure/ temperature swing adsorption.

PSA processes rely on the phenomenon of gases being more readily adsorbed within the pore structure or free volume of an adsorbent material when the gas is under pressure, i.e., the higher the gas pressure, the greater the amount readily-adsorbed gas adsorbed. When the pressure is reduced, the adsorbed component is released, or desorbed.

PSA processes may be used to separate gases of a gas mixture because different gases tend to fill the micropore of the adsorbent to different extents. If a gas mixture, such as natural gas, is passed under pressure through a vessel containing a polymeric or microporous adsorbent that is more selective towards carbon dioxide than it is for methane, at least a portion of the carbon dioxide will be selectively adsorbed by the adsorbent, and the gas exiting the vessel will be enriched in methane. When the adsorbent reaches the end of its capacity to adsorb carbon dioxide, it is regenerated by reducing the pressure, thereby releasing the adsorbed carbon dioxide. The adsorbent is then typically purged and repressurized and ready for another adsorption cycle.

TSA processes rely on the phenomenon that gases at lower temperatures are more readily adsorbed within the pore structure or free volume of an adsorbent material compared to higher temperatures, i.e., when the temperature of the adsorbent is increased, the adsorbed gas is released, or desorbed. By cyclically swinging the temperature of an adsorbent bed, TSA processes can be used to separate gases in a mixture when used with an adsorbent that is selective for one or more of the components of a gas mixture.

The provided processes, apparatus, and systems may be used to prepare natural gas products by removing contaminants and heavy hydrocarbons, i.e., hydrocarbons having at least two carbon atoms. The provided processes, apparatus, and systems are useful for preparing gaseous feed streams for use in utilities, including separation applications such as dew point control, sweetening/detoxification, corrosion protection/control, dehydration, heating value, conditioning, and purification. Examples of utilities that utilize one or more separation applications include generation of fuel gas, seal gas, non-potable water, blanket gas, instrument and control gas, refrigerant, inert gas, and hydrocarbon recovery. Exemplary "not to exceed" product (or "target") gas specifications include: (a) 2 vol.% $CO_2$, 4 ppm $H_2S$, (b) 50 ppm $CO_2$, 4 ppm $H_2S$, or (c) 1.5 vol.% $CO_2$, 2 ppm $H_2S$.

The provided processes, apparatus, and systems may be used to remove acid gas from hydrocarbon streams. Acid gas removal technology becomes increasingly important as remaining gas reserves exhibit higher concentrations of acid gas, i.e., sour gas resources. Hydrocarbon feed streams vary widely in amount of acid gas, such as from several parts per million acid gas to 90 vol.% acid gas. Non-limiting examples of acid gas concentrations from exemplary gas reserves include concentrations of at least: (a) 1 vol.% $H_2S$, 5 vol.% $CO_2$, (b) 1 vol.% $H_2S$, 15 vol.% $CO_2$, (c) 1 vol.% $H_2S$, 60 vol.% $CO_2$, (d) 15 vol.% $H_2S$, 15 vol.% $CO_2$, and (e) 15 vol.% $H_2S$, 30 vol.% $CO_2$.

One or more of the following Concepts A-O may be utilized with the processes, apparatus, and systems, provided above, to prepare a desirable product stream while maintaining high hydrocarbon recovery:

**Concept A:** using one or more kinetic swing adsorption process, such as pressure swing adsorption (PSA), thermal swing adsorption (TSA), calcination, and partial pressure swing or displacement purge adsorption (PPSA), including combinations of these processes; each swing adsorption process may be utilized with rapid cycles, such as using one or more rapid cycle pressure swing adsorption (RC-PDS) units, with one or more rapid cycle temperature swing adsorption (RC-TSA) units or with one or more rapid cycle partial pressure swing adsorption (RC-PPSA) units; exemplary kinetic swing adsorption processes are described in U.S. Patent Application Publication Nos. 2008/0282892, 2008/0282887, 2008/0282886, 2008/0282885, and 2008/0282884;

**Concept B:** removing acid gas with RC-TSA using advanced cycles and purges as described in U.S. patent application no. 61/447,848, filed March 1, 2011, bearing docket number2011EM060;

**Concept C:** using a mesopore filler to reduce the amount of trapped methane in the adsorbent and increase the overall hydrocarbon recovery, as described in U.S. Patent Application Publication Nos. 2008/0282892, 2008/0282885, 2008/028286. The non-sweepable void space present between the crystals or pores within the adsorbing channel wall is reduced by filling the mesophase pores between the particles to reduce the open volume while allowing rapid gas transport throughout the adsorbent layer. This filling of the non-sweepable void space is desired to reduce to acceptable levels the quantity of desired product, lost during the rapid desorption step as well as to allow a high degree of adsorber bed purity following thermal desorption. Such mesophase pore filling can be accomplished in a variety of ways. For example, a polymer filler can be used with rapid diffusion of $H_2S$ and $CO_2$, such as a silicon rubber or a polymer with intrinsic porosity. Another way can be done by filling the void space with a pyrolitic carbon having mesoporosity and/or microporosity. Still another way would be by filling the void space with inert solids of smaller and smaller sizes, or by filling the void space with a replenishable liquid through which the desired gases rapidly diffuse (such as water, solvents, or oil). Preferably, the void space within the adsorbent wall will be reduced to less than 60 vol.%, preferably to less than 70%, and more preferably to less than 80%.;

**Concept D:** Choosing an appropriate adsorbent materials to provide high selectivity and minimize adsorption (and losses) of methane and other hydrocarbons, such as one or more of the zeolites described in U.S. Patent Application Publication Nos. 2008/0282887 and 2009/0211441.

Preferred adsorbents for the removal of acid gases are selected from a group consisting of mesoporous or microporous materials, with or without functionality for chemical reactions with acid gases. Examples of materials without functionality include cationic zeolites and stannosilicates. Functionalized materials that chemically react with $H_2S$ and $CO_2$ exhibit significantly increased selectivity for $H_2S$ and $CO_2$ over hydrocarbons. Furthermore, they do not catalyze undesirable reactions with hydrocarbons that would occur on acidic zeolites. Functionalized mesoporous adsorbents are also preferred, wherein their affinity toward hydrocarbons is further reduced compared to unfunctionalized smaller pore materials, such as zeolites.

Alternatively, adsorption of heavy hydrocarbons can be kinetically suppressed by using small-pore functionalized materials, in which diffusion of heavy hydrocarbons is slow compared to $H_2S$ and $CO_2$. Care should also be taken to reduce condensation of hydrocarbons with carbon contents equal to or above about 4 (i.e., $C_4+$ hydrocarbons) on external surfaces of $H_2S$ and $CO_2$ selective adsorbents.

Non-limiting example of functional groups suitable for use herein include primary, secondary, tertiary and other non-protogenic, basic groups such as amidines, guanidines and biguanides. Furthermore, these materials can be functionalized with two or more types of functional groups. To obtain substantially complete removal of $H_2S$ and $CO_2$ from natural gas streams, an adsorbent material preferably is selective for $H_2S$ and $CO_2$ but has a low capacity for both methane and heavier hydrocarbons ($C_2+$). In one or more embodiments, it is preferred to use amines, supported on silica based or other supports because they have strong adsorption isotherms for acid gas species. They also have high capacities for such species, and as a consequence of their high heats of adsorption, they have a relatively strong temperature response (i.e. when sufficiently heated they readily desorb $H_2S$ and $CO_2$ and can thus be used without excessive temperature swings). Preferred are adsorbents that adsorb in the 25° C to 70° C range and desorb in the 90° C to 140° C range. In systems requiring different adsorbents for $CO_2$ and $H_2S$ removal, a layered bed comprising a suitable adsorbent for the targeted species may be desirable

For $CO_2$ removal from natural gas, it is preferred to formulate the adsorbent with a specific class of 8-ring zeolite materials that has a kinetic selectivity. The kinetic selectivity of this class of 8-ring zeolite materials allows $CO_2$ to be rapidly transmitted into zeolite crystals while hindering the transport of methane so that it is possible to selectively separate $CO_2$ from a mixture of $CO_2$ and methane. For the removal of $CO_2$ from natural gas, this specific class of 8-ring zeolite materials preferably has a Si/Al ratio from about 1 to about 25. In other preferred embodiments, the Si/Al ratio of the zeolite material is from 2 to about 1000, preferably from about 10 to about 500, and more preferably from about 50 to about 300. It should be noted that as used herein, the term Si/Al is defined as the molar ratio of silica to alumina of the zeolitic structure. This preferred class of 8-ring zeolites that are suitable for use herein allow $CO_2$ to access the internal pore structure through 8-ring windows in a manner such that the ratio of single component diffusion coefficients for $CO_2$ over methane (i.e., $DCO_2/DCH_4$) is greater than 10, preferably greater than about 50, and more preferably greater than about 100 and even more preferably greater than 200.

In many instances, nitrogen also has to be removed from natural gas or gas associated with the production of oil to obtain high recovery of a purified methane product from nitrogen containing gas. There have been very few molecular sieve sorbents with significant equilibrium or kinetic selectivity for nitrogen separation from methane. For $N_2$ separation from natural gas it is also preferred to formulate the adsorbent with a class of 8-ring zeolite materials that has a kinetic selectivity. The kinetic selectivity of this class of 8-ring materials allows $N_2$ to be rapidly transmitted into zeolite crystals while hindering the transport of methane so that it is possible to selectively separate $N_2$ from a mixture of $N_2$ and methane. For the removal of $N_2$, from natural gas, this specific class of 8-ring zeolite materials also has a Si/Al ratio from about 2 to about 1000, preferably from about 10 to about 500, and more from about 50 to about 300. This preferred class of 8-ring zeolites that are suitable for use herein allow $N_2$ to access the internal pore structure through 8-ring windows in a manner such that the ratio of single component diffusion coefficients for $N_2$ over methane (i.e., $DN_2/DCH_4$) is greater than 5, preferably greater than about 20, and more preferably greater than about 50 and even more preferably greater than 100. Resistance to fouling in swing adsorption processes during the remove $N_2$ from natural gas is another advantage offered by this class of 8-ring zeolite materials.

In other instances, it is also desirable to remove $H_2S$ from natural gas which can contain from about 0.001% $H_2S$ to about 70% $H_2S$. In this case, it can be advantageous to formulate the adsorbent with stannosilicates as well as the aforementioned class of 8-ring zeolites that has kinetic selectivity. The kinetic selectivity of this class of 8-ring materials allows $H_2S$ to be rapidly transmitted into zeolite crystals while hindering the transport of methane so that it is possible to selectively separate $H_2S$ from a mixture of $H_2S$ and methane. For the removal of $H_2S$, from natural gas, this specific class of 8-ring zeolite materials has a Si/Al ratio from about 2 to about 1000, preferably from about 10 to about 500, and more from about 50 to about 300. This preferred class of 8-ring zeolites that are suitable for use herein allow $H_2S$ to access the internal pore structure through 8-ring windows in a manner such that the ratio of single component diffusion coefficients for $H_2S$ over methane (i.e., $DH_2S/DCH_4$) is greater than 5, preferably greater than about 20, and more preferably greater than about 50 and even more preferably greater than 100. DDR, Sigma-1, and ZSM-58 are also suitable for the removal of $H_2S$ from natural gas. In some applications the $H_2S$ has to be removed to the ppm or sub ppm levels.

Other non-limiting examples of preferred selective adsorbent materials for use in embodiments herein include microporous materials such as zeolites, AlPOs, SAPOs, MOFs (metal organic frameworks), ZIFs (zeolitic imidazolate frameworks, such as ZIF-7, ZIF-8, ZIF-22, etc.) and carbons, as well as mesoporous materials such as the amine functionalized MCM materials. For the acidic gases such as hydrogen sulfide and carbon dioxide which are typically found in natural gas streams, adsorbent such as cationic zeolites, amine-functionalized mesoporous materials, stannosilicates, carbons are also preferred.;

**Concept E:** depressurizing one or more RC-PSA units in multiple steps to intermediate pressures so that the acid gas exhaust can be captured at a higher average pressure, thereby decreasing the compression required for acid gas injection; pressure levels for the intermediate depressurization steps may be matched to the interstage pressures of the acid gas compressor to optimize the overall compression system;

**Concept F:** using exhaust or recycle streams to minimize processing and hydrocarbon losses, such as using exhaust streams from one or more RC-PSA units as fuel gas instead of reinjecting or venting;

**Concept G:** using multiple adsorbent materials in a single bed to remove trace amounts of first contaminants, such as $H_2S$, before removal of a second contaminant, such as $CO_2$; such segmented beds may provide rigorous acid gas removal down to ppm levels with RC-PSA units with minimal purge flow rates;

**Concept H:** using feed compression before one or more RC-PSA units to achieve a desired product purity;

**Concept I:** contemporaneous removal of non-acid gas contaminants such as mercaptans, COS, and BTEX; selection processes and materials to accomplish the same;

**Concept J:** using structured adsorbents for gas-solid contactors to minimize pressure drop compared to conventional packed beds;

**Concept K:** selecting a cycle time and cycle steps based on adsorbent material kinetics; and

**Concept L:** using a process and apparatus that uses, among other equipment, two RC-PSA units in series, wherein the first RC-PSA unit cleans a feed stream down to a desired product purity and the second RC-PSA unit cleans the exhaust from the first unit to capture methane and maintain high hydrocarbon recovery; use of this series design may reduce the need for a mesopore filler;

**Concept M:** using parallel channel contactors, wherein gas/solid contacting takes place in relatively small diameter adsorbent lined channels. This structure of the contactor will provide the benefits of rapid adsorption kinetics through minimization of gas film resistance and high gas solid communication. A preferred adsorber design will generate a sharp adsorption front.

It is preferred to have very rapid gas to adsorbent kinetics, i.e. the length through which the target species must diffuse to make contact with the adsorbent wall is kept short, preferably less than 1000 microns, more preferably less than 200 microns, and most preferably less than 100 microns. Favorable adsorbent kinetics may be realized by, while limiting bed pressure drop to acceptable values, utilizing a parallel channel contactors wherein the feed and purge gases are confined to a plurality of very narrow (1000 to 30 micron diameter) open channels that are lined to an effective thickness of the adsorbent material.

By "effective thicknesses" we mean a range of about 500 microns to 30 microns for most applications. In the most limiting case of laminar gas flow, the very narrow channels will limit the maximum diffusion distance for a trace species to no more than ½ the diameter of the channel. Even when adsorbing the desired species at the leading edge of the adsorption front, where their concentrations will approach zero in the gas phase, a sharp adsorption front can be maintained by using such small diameter parallel channel structured adsorption bed configurations. Such a configuration can be in the form of multiple independent parallel channels, or in the form of very wide, very short channels as may be achieved by using a spiral wound design.

**Concept N:** A means for rapidly heating and cooling the adsorbent bed structure so that adsorption can occur at a lower temperature and desorption at a higher temperature. The adsorption step will then occur at high pressure and the higher temperature desorption step can optionally take place at a reduced pressure in order to increase adsorbent swing capacity. Depending upon adsorbent properties, it may be desirable to use a bed architecture suitable for either an externally temperature controlled or internally temperature controlled scheme.

By "internal temperature control" we mean the use of a heating and cooling fluid media, either gaseous or liquid, preferably liquid, that can be circulated through the same adsorbent lined channels that are utilized for the gaseous feed flow. Internal temperature control requires that the adsorbent material not be adversely affected by the temperature control fluid and that the temperature control fluid be easily separated from the previously adsorbed species ($H_2S$ and $CO_2$) following the heating step. Further, for internal temperature control, the pressure drop across each of the parallel channels in the structured bed during the gaseous feed adsorption step is preferably sufficiently high to clear each channel (or the single channel in the case of spiral wound designs) of the temperature control fluid. Additionally, internal fluid flow temperature designs will preferably utilize an adsorbent that does not strongly adsorb the temperature control fluid so that $H_2S$ and $CO_2$ may be usefully adsorbed even in the presence of the temperature control fluid.

Non-limiting examples of such adsorbents include amine functionalized microporous and mesoporous adsorbents. A non-limiting example of such a system would be the use of supported amines on a water stable support with the use of hot and cold water (pressurized liquid or used as steam for heating) for heating and cooling. Whereas liquid water will be left within the adsorbent wall during the adsorption step, if the thickness of the adsorbent wall is kept small (less than 1000 microns, preferably less than 200 microns, and most preferably less than 100 microns) it will be possible for $H_2S$ and $CO_2$ to diffuse through the liquid water in time scales less than 1 minute, more preferred less than 10 seconds to become adsorbed by the supported amine. Following the desorption step, $H_2S$ and $CO_2$ can be easily separated using fractionation or other methods known to those skilled in the art.

By "external temperature control" we mean an adsorbent bed structure where the heating and cooling fluid is kept from contact with the gas carrying adsorbent channels. Such a structure can resemble a tube and shell heat exchanger, plate and frame heat exchanger or hollow fibers with a fluid impermeable barrier layer on the outer diameter or on the inner diameter, or any other suitable structures. In order to obtain rapid heating and cooling, the distance through which the heat must diffuse from the temperature control fluid to the adsorbent layer must be kept to a minimum, ideally less than 10,000 microns, more preferably less than 1000 microns, most preferably less than 200 microns.

A non-limiting example of such an external temperature control bed design would be the use of hollow fibers with a fluid impermeable barrier layer on the outer diameter wherein the hollow fibers are comprised of a mixed matrix system of polymeric and supported amine adsorbents. Feed gas would be passed through the inner diameter of the porous fiber to be adsorbed by the adsorbent at lower temperatures, while cool temperature control fluid is flowing over the fibers outer diameters. Desorption would be accomplished by passing hot temperature control fluid, preferably in a counter-current direction over the fibers outer diameter, thus heating the adsorbent. The cycle is completed by exchanging the hot temperature control fluid with cold fluid to return the fiber containing the adsorbent to the desired adsorption temperature.

In a preferred embodiment, the rate of heat flow in the system would be such that a sharp temperature gradient in the temperature control fluid would be established during heating and cooling such that the sensible heat of the system can be recuperated within the adsorbent bed structure. For such a non-limiting hollow fiber example, the useful fiber outer diameter dimensions is less than 20,000 microns, preferably less than 2000 microns, and most preferably less than 1000 microns. The useful hollow fiber inner diameters (the feed gas channels) is less than 10,000 microns, preferably less than 1000 microns, and most preferably less than 500 microns as suitable based on the desired adsorption and desorption cycle times, feed adsorbed species concentrations, and adsorbent layer swing capacity for those species.

In one or embodiments, it is advantageous to keep the ratio of non-adsorbing thermal mass in the adsorbent bed to adsorbent as low as possible. This ratio will preferably be less than 20, more preferably less than 10, and most preferred less than 5. In this manner, the sensible heat of the system that must be swung in each cycle may be kept to a minimum.

**Concept O:** A relatively low flow of about 0.01 to 5 % of the total feed of a clean gas substantially free of $H_2S$ or $CO_2$ is utilized as a purge gas. Non-limiting examples of such gases (i.e., "clean gas") include methane and nitrogen that are maintained flowing through the parallel channels in a direction counter-current to the feed direction during at least a portion of the desorption steps of the process. It is preferred that the flow rate of this clean gas be sufficient to overcome the natural diffusion of the desorbing $H_2S$ and $CO_2$ to maintain the product end of the adsorbing channel in a substantially clean condition. It is this counter-current purge flow during desorption that ensures that on each subsequent adsorption cycle there will be no bleed-through of target species, such as $H_2S$ or $CO_2$ into the product stream.

A preferred cycle and bed design for the practice of the present invention is that the product end of the adsorbent channels, i.e. the end opposite the end where feed gases enter) have a low, or ideally essentially zero concentration of adsorbed $H_2S$ and $CO_2$. In this manner, and with suitable structured channels as described above, the $H_2S$ and $CO_2$ will be rigorously removed from the feed gas stream. The downstream end of the bed can be kept clean as described by maintaining a low flow of a clean fluid substantially free of $H_2S$ and $CO_2$, in a counter-current direction relative to the feed direction, during the desorption step(s), or more preferably, during all the heating and cooling steps in the cycle. It is further preferred that during the adsorption step, the adsorption part of the cycle be limited to a time such that the advancing adsorption front of $H_2S$ and $CO_2$ loaded adsorbent not reach the end of the channels, i.e. adsorption to be halted prior to $H_2S$ and/or $CO_2$ breakthrough so that a substantially clean section of the adsorbent channel remains substantially free of target species. With reasonably sharp adsorption fronts, this will allow more than 50 vol.% of the adsorbent to be utilized, more preferred more than 75 vol.%, and most preferred more than 85 vol.%.

The processes, apparatus, and systems provided herein are useful in large gas treating facilities, such as facilities that process more than five million standard cubic feet per day (MSCFD) of natural gas, or more than 15 MSCFD of natural gas, or more than 25 MSCFD of natural gas, or more than 50 MSCFD of natural gas, or more than 100 MSCFD of natural gas, or more than 500 MSCFD of natural gas, or more than one billion standard cubic feet per day (BSCFD) of natural gas, or more than two BSCFD of natural gas.

Compared to conventional technology, the provided processes, apparatus, and systems require lower capital investment, lower operating cost, and less physical space, thereby enabling implementation offshore and in remote locations, such as Arctic environments. The provided processes, apparatus, and systems provide the foregoing benefits while providing high hydrocarbon recovery as compared to conventional technology.

Although the invention has been described in detail herein, the skilled practitioner will recognize other embodiments of the invention that are within the scope of the claims.

**Claims**

**1.** A reverse-flow adsorber (200) with an adsorber body (206) partially enclosing an adsorption region, the adsorber body comprising:

two substantially opposing open ends with a first head (218, 300, 400) capping one end of the adsorber body, a second head (220) capping the opposing end of the adsorber body, a fixed bed (212, 214) disposed within the adsorber body comprising solid material capable of promoting adsorption with a gas stream, at least one gas stream inlet associated with the first head (218, 300, 400), at least one gas stream outlet associated with the second head (220), at least one intake poppet valve (234, 306, 406) located in the first head and at least one exhaust poppet valve (252) located in the second head; and at least one gas stream inlet associated with the second head (220) at least one gas stream outlet associated with the first head (218, 300, 400),

at least one intake poppet valve (254) located in the second head and at least one exhaust poppet valve (236) located in the first head;

wherein the at least one intake poppet valve (234) in the first head comprises a disk element (238, 308, 408) connected to a valve stem element (240, 310, 410), wherein the disk element comprises a flat or profiled surface facing the adsorbent bed, and wherein the distance during operation between the at least one intake poppet valve disk element flat or profiled surface in the fully open position of the valve, when the valve lift is at its maximum, and the fixed bed surface is between 5% and 200% of the disk element diameter.

2. The adsorber of claim 1, wherein each valve is associated with an externally accessible valve seat (304, 404) that fits within its respective inlet to the adsorber body and/or outlet from the adsorber body and is sealed to the head.

3. The adsorber of claim 2, wherein the valve seat is attached to the head via one of a rotatable locking mechanism, thread-in seats, and pressed-in seats.

4. The adsorber of claim 1, which further comprises a valve stem seal associated with the valve stem element.

5. The adsorber of claim 1, wherein the valve stem seal is a reciprocating compressor-type seal.

6. The adsorber of claim 1, wherein the poppet valve comprises a linearly actuatable valve stem engageable with an actuator (242) to open and close the valve by imparting linear motion.

7. The adsorber of claim 6, wherein a common actuator controls linearly aligned plural valves common to the particular fluid flow stream.

8. The adsorber of claim 1, wherein the poppet valves are circular poppet valves, the circular poppet valves associated with the particular head are substantially circular, uniform in diameter and spaced center-to-center by 120% to 400% of the average poppet valve disk element diameter.

9. A process for rapid stream-switching of at least two streams in a reverse-flow adsorber (200) comprising an adsorber body (206) partially enclosing an adsorption region comprising two substantially opposing open ends with a first head (218, 300, 400) capping one end of the adsorber body, a second head (220) capping the opposing end of the adsorber body, a fixed bed (212, 214) disposed within the adsorber body comprising solid material capable of promoting adsorption with a gas stream, which comprises:

   i) introducing from one or more inlet gas sources at least one first gas stream to at least one gas stream inlet associated with the first head through the first head and into the adsorber body and withdrawing a treated first gas stream from the adsorber body and through the second head to at least one gas stream outlet associated with the second head; wherein said introducing and withdrawing are controlled respectively by at least one intake poppet valve (234, 306, 406) located in the first head and at least one exhaust poppet valve (252) located in the second head; and

   ii) introducing from one or more inlet gas sources at least one second gas stream to at least one gas stream inlet associated with the second head through the second head and into the adsorber body and withdrawing a treated second gas stream from the adsorber body and through the first head to at least one gas stream outlet associated with the first head, wherein said introducing and withdrawing are controlled respectively by at least one intake poppet valve (254) located in the second head and at least one exhaust poppet valve (236) located in the first head,

   wherein the at least one intake poppet valve in the first head comprises a disk element (238, 308, 408) connected to a valve stem element (240, 310, 410), wherein the disk element comprises a flat or profiled surface facing the adsorbent bed, and wherein the distance during operation between the at least one intake poppet valve disk element flat or profiled surface in the fully open position of the valve, when the valve lift is at its maximum, and the fixed bed surface is between 5% and 200% of the disk element diameter.

10. Use of the adsorber of claim 1, wherein said at least one intake poppet valve (234, 306, 406) located in the first head has a substantially open position when fluid flow in the flow path is in a first flow direction and a substantially closed position when fluid flow in the flow path is in a second, opposite flow direction.

11. The use of claim 10, wherein the adsorber has a first valve pair on opposite sides of at least a portion of the flow path, wherein said at least one intake poppet valve (234, 306, 406) located in the first head and said at least one exhaust poppet valve (252) located in the second head are each in a substantially open position when fluid flow in the flow path is in a first flow direction and a substantially closed position when fluid flow in the flow path is in a second, opposite flow direction.

## Patentansprüche

1. Gegenstromadsorber (200) mit einem Adsorberkörper (206), der eine Adsorptionsregion teilweise umschließt, bei dem der Adsorberkörper umfasst:

    zwei im Wesentlichen gegenüber liegende offene Enden mit einem ersten Kopf (218, 300, 400), der ein Ende des Adsorberkörpers abdeckt,
    einen zweiten Kopf (220), der das gegenüber liegende Ende des Adsorberkörpers abdeckt,
    ein Festbett (212, 214), das innerhalb des Adsorberkörpers angeordnet ist und festes Material umfasst, das in der Lage ist, die Adsorption mit einer Gasströmung zu fördern,
    mindestens einen Gasströmungseinlass, der mit dem ersten Kopf (218, 300, 400) verbunden ist,
    mindestens einen Gasströmungsauslass, der mit dem zweiten Kopf (220) verbunden ist,
    mindestens ein Ansaugtellerventil (234, 306, 406), das sich in dem ersten Kopf befindet, und mindestens ein Abgastellerventil (252), das sich in dem zweiten Kopf befindet, und
    mindestens einen Gasströmungseinlass, der mit dem zweiten Kopf (220) verbunden ist,
    mindestens einen Gasströmungsauslass, der mit dem ersten Kopf (218, 300, 400) verbunden ist,
    mindestens ein Ansaugtellerventil (254), das sich in dem zweiten Kopf befindet, und mindestens ein Abgastellerventil (236), das sich in dem ersten Kopf befindet,
    wobei das mindestens eine Ansaugtellerventil (234) in dem ersten Kopf ein Scheibenelement (238, 308, 408) umfasst, das mit einem Ventilschaftelement (240, 310, 410) verbunden ist, wobei das Scheibenelement eine flache oder profilierte Oberfläche umfasst, die zu dem Adsorbensbett weist, und wobei der Abstand zwischen der mindestens einen flachen oder profilierten Oberfläche des Scheibenelements des Ansaugtellerventils während des Betriebs in der vollständig offenen Position des Ventils, wenn der Ventilhub auf seinem Maximum ist, und der Festbettoberfläche zwischen 5 % und 200 % des Scheibenelementdurchmessers liegt.

2. Adsorber nach Anspruch 1, bei dem jedes Ventil mit einem von außen zugänglichen Ventilsitz (304, 404) verbunden ist, der in seinem jeweiligen Einlass zu dem Adsorberkörper und/oder Auslass von dem Adsorberkörper passt und gedichtet an dem Kopf angebracht ist.

3. Adsorber nach Anspruch 2, bei dem der Ventilsitz an dem Kopf mittels einem von einem rotierbaren Arretiermechanismus, eingeschraubten Sitzen und eingepressten Sitzen befestigt ist.

4. Adsorber nach Anspruch 1, der des Weiteren eine Ventilschaftdichtung umfasst, die mit dem Ventilschaftelement verbunden ist.

5. Adsorber nach Anspruch 1, bei dem die Ventilschaftdichtung eine Dichtung vom Kolbenkompressortyp ist.

6. Adsorber nach Anspruch 1, bei dem das Tellerventil einen linear betätigbaren Ventilschaft umfasst, der mit einem Aktor (242) in Eingriff bringbar ist, um das Ventil durch Verleihen von Linearbewegung zu öffnen und zu schließen.

7. Adsorber nach Anspruch 6, bei dem ein gemeinsamer Aktor mehrere linear ausgerichtete Ventile steuert, welche von der speziellen Fluidflussströmung gemeinsam genutzt werden.

8. Adsorber nach Anspruch 1, bei dem die Tellerventile kreisförmige Tellerventile sind, und die mit dem speziellen Kopf verbundenen kreisförmigen Tellerventile im Wesentlichen kreisförmig, von einheitlichem Durchmesser und von Mitte-zu-Mitte um 120 % bis 400 % des durchschnittlichen Durchmessers des Scheibenelements des Tellerventils beabstandet sind.

9. Verfahren zur raschen Strömungsumschaltung von mindestens zwei Strömungen in einem Gegenstromadsorber (200), der einen Adsorberkörper (206) umfasst, der eine Adsorptionsregion teilweise umschließt, die zwei im Wesentlichen gegenüber liegende offene Enden umfasst, wobei ein erster Kopf (218, 300, 400) ein Ende des Adsorberkörpers abdeckt, ein zweiter Kopf (220) das gegenüber liegende Ende des Adsorberkörpers abdeckt, wobei ein Festbett (212, 214), das innerhalb des Adsorberkörpers angeordnet ist, festes Material umfasst, das in der Lage ist, Adsorption mit einer Gasströmung zu fördern, welches Verfahren umfasst:

i) Einbringen von mindestens einer ersten Gasströmung aus einer oder mehreren Einlassgasquellen in mindestens einen Gasströmungseinlass, der mit dem ersten Kopf verbunden ist, durch den ersten Kopf hindurch und in den Adsorberkörper, und Abziehen einer behandelten ersten Gasströmung aus dem Adsorberkörper und durch den zweiten Kopf hindurch zu mindestens einem Gasströmungsauslass, der mit dem zweiten Kopf verbunden ist, wobei das Einbringen und Abziehen jeweils durch mindestens ein Ansaugtellerventil (234, 306, 406), das sich in dem ersten Kopf befindet, und mindestens ein Abgastellerventil (252) gesteuert wird, das sich in dem zweiten Kopf befindet, und

ii) Einbringen von mindestens einer zweiten Gasströmung aus einer oder mehreren Einlassgasquellen in mindestens einen Gasströmungseinlass, der mit dem zweiten Kopf verbunden ist, durch den zweiten Kopf hindurch und in den Adsorberkörper, und Abziehen einer behandelten zweiten Gasströmung aus dem Adsorberkörper und durch den ersten Kopf hindurch zu mindestens einem Gasströmungsauslass, der mit dem ersten Kopf verbunden ist, wobei das Einbringen und Abziehen jeweils durch mindestens ein Ansaugtellerventil (254), das sich in dem zweiten Kopf befindet, und mindestens ein Abgastellerventil (236) gesteuert wird, das sich in dem ersten Kopf befindet,

wobei das mindestens eine Ansaugtellerventil in dem ersten Kopf ein Scheibenelement (238, 308, 408) umfasst, das mit einem Ventilschaftelement (240, 310, 410) verbunden ist, wobei das Scheibenelement eine flache oder profilierte Oberfläche umfasst, die zu dem Adsorbensbett weist, und wobei der Abstand zwischen der mindestens einen flachen oder profilierten Oberfläche des Scheibenelements des Ansaugtellerventils während des Betriebs in der vollständig offenen Position des Ventils, wenn der Ventilhub auf seinem Maximum ist, und der Festbettoberfläche zwischen 5 % und 200 % des Scheibenelementdurchmessers liegt.

10. Verwendung des Adsorbers nach Anspruch 1, bei der das mindestens eine Ansaugtellerventil (234, 306, 406), das sich in dem ersten Kopf befindet, eine im Wesentlichen offene Position aufweist, wenn der Fluidfluss in dem Flusspfad in einer ersten Flussrichtung erfolgt, und eine im Wesentlichen geschlossene Position aufweist, wenn der Fluidfluss in dem Flusspfad in einer zweiten entgegengesetzten Flussrichtung erfolgt.

11. Verwendung nach Anspruch 10, bei der der Adsorber ein erstes Ventilpaar auf gegenüber liegenden Seiten von mindestens einem Abschnitt des Flusspfads aufweist, wobei das mindestens eine Ansaugtellerventil (234, 306, 406), das sich in dem ersten Kopf befindet, und das mindestens eine Abgastellerventil (252), das sich in dem zweiten Kopf befindet, jeweils in einer im Wesentlichen offenen Position sind, wenn der Fluidfluss in dem Flusspfad in einer ersten Flussrichtung erfolgt, und einer im Wesentlichen geschlossenen Position sind, wenn der Fluidfluss in dem Flusspfad in einer zweiten, entgegengesetzten Flussrichtung erfolgt.

**Revendications**

1. Adsorbeur à contre-courant (200) avec un corps d'adsorbeur (206) enfermant partiellement une région d'adsorption, le corps d'adsorbeur comprenant :

deux extrémités ouvertes sensiblement opposées avec une première tête (218, 300, 400) coiffant une extrémité du corps d'adsorbeur,
une deuxième tête (220) coiffant l'extrémité opposée du corps d'adsorbeur,
un lit fixe (212, 214) disposé à l'intérieur du corps d'adsorbeur, comprenant un matériau solide pouvant favoriser l'adsorption avec un courant gazeux,
au moins une entrée de courant gazeux associée à la première tête (218, 300, 400),
au moins une sortie de courant gazeux associée à la deuxième tête (220),
au moins une soupape champignon d'admission (234, 306, 406) située dans la première tête et au moins une soupape champignon d'échappement (252) située dans la deuxième tête ; et
au moins une entrée de courant gazeux associée à la deuxième tête (220),
au moins une sortie de courant gazeux associée à la première tête (218, 300, 400),
au moins une soupape champignon d'admission (254) située dans la deuxième tête et au moins une soupape champignon d'échappement (236) située dans la première tête ;
dans lequel l'au moins une soupape champignon d'admission (234) dans la première tête comprend un élément faisant disque (238, 308, 408) relié à un élément faisant tige de soupape (240, 310, 410), dans lequel l'élément faisant disque comprend une surface plate ou profilée faisant face au lit d'adsorbant, et dans lequel la distance en fonctionnement entre la surface plate ou profilée de l'élément faisant disque de l'au moins une soupape champignon d'admission dans la position complètement ouverte de la soupape, quand la levée de soupape est à son maximum, et la surface du lit fixe représente entre 5 % et 200 % du diamètre de l'élément faisant disque.

2. Adsorbeur de la revendication 1, dans lequel chaque soupape est associée à un siège de soupape accessible de l'extérieur (304, 404) qui s'ajuste à l'intérieur de son entrée respective du corps d'adsorbeur et/ou de sa sortie respective du corps d'adsorbeur et est scellé à la tête.

3. Adsorbeur de la revendication 2, dans lequel le siège de soupape est attaché à la tête par soit un mécanisme de verrouillage rotatif, soit un siège fileté, soit un siège embouti.

4. Adsorbeur de la revendication 1, qui comprend en outre un joint d'étanchéité de tige de soupape associé à l'élément faisant tige de soupape.

5. Adsorbeur de la revendication 1, dans lequel le joint d'étanchéité de tige de soupape est un joint d'étanchéité de type compresseur à piston.

6. Adsorbeur de la revendication 1, dans lequel la soupape champignon comprend une tige de soupape actionnable linéairement enclenchable avec un actionneur (242) pour ouvrir et fermer la soupape en conférant un mouvement linéaire.

7. Adsorbeur de la revendication 6, dans lequel un actionneur commun contrôle plusieurs soupapes alignées linéairement communes à un courant d'écoulement de fluide particulier.

8. Adsorbeur de la revendication 1, dans lequel les soupapes champignons sont des soupapes champignons circulaires, les soupapes champignons circulaires associées à la tête particulière sont sensiblement circulaires, de diamètre uniforme et espacées de centre à centre par 120 % à 400 % du diamètre moyen d'élément faisant disque de soupape champignon.

9. Procédé de basculement rapide d'au moins deux courants dans un adsorbeur à contre-courant (200) comprenant un corps d'adsorbeur (206) enfermant partiellement une région d'adsorption comprenant deux extrémités ouvertes sensiblement opposées avec une première tête (218, 300, 400) coiffant une extrémité du corps d'adsorbeur, une deuxième tête (220) coiffant l'extrémité opposée du corps d'adsorbeur, un lit fixe (212, 214) disposé à l'intérieur du corps d'adsorbeur comprenant un matériau solide pouvant favoriser l'adsorption avec un courant gazeux, qui comprend :

i) l'introduction, depuis une ou plusieurs sources de gaz d'entrée, d'au moins un premier courant gazeux dans au moins une entrée de courant gazeux associée à la première tête, par la première tête et à l'intérieur du corps d'adsorbeur, et le retrait d'un premier courant gazeux traité depuis le corps d'adsorbeur et par la deuxième tête jusqu'à au moins une sortie de courant gazeux associée à la deuxième tête, lesdits introduction et retrait étant respectivement contrôlés par au moins une soupape champignon d'admission (234, 306, 406) située dans la première tête et au moins une soupape champignon d'échappement (252) située dans la deuxième tête ; et
ii) l'introduction, depuis une ou plusieurs sources de gaz d'entrée, d'au moins un deuxième courant gazeux dans au moins une entrée de courant gazeux associée à la deuxième tête, par la deuxième tête et à l'intérieur du corps d'adsorbeur, et le retrait d'un deuxième courant gazeux traité depuis le corps d'adsorbeur et par la première tête jusqu'à au moins une sortie de courant gazeux associée à la première tête, lesdits introduction et retrait étant respectivement contrôlés par au moins une soupape champignon d'admission (254) située dans la deuxième tête et au moins une soupape champignon d'échappement (236) située dans la première tête,

dans lequel l'au moins une soupape champignon d'admission dans la première tête comprend un élément faisant disque (238, 308, 408) relié à un élément faisant tige de soupape (240, 310, 410), dans lequel l'élément faisant disque comprend une surface plate ou profilée faisant face au lit d'adsorbant, et dans lequel la distance en fonctionnement entre la surface plate ou profilée de l'élément faisant disque de l'au moins une soupape champignon d'admission dans la position complètement ouverte de la soupape, quand la levée de soupape est à son maximum, et la surface du lit fixe représente entre 5 % et 200 % du diamètre de l'élément faisant disque.

10. Utilisation de l'adsorbeur de la revendication 1, dans laquelle ladite au moins une soupape champignon d'admission (234, 306, 406) située dans la première tête a une position sensiblement ouverte quand un écoulement de fluide dans le passage se fait dans une première direction d'écoulement et une position sensiblement fermée quand un écoulement de fluide dans le passage se fait dans une deuxième direction d'écoulement, opposée.

11. Utilisation de la revendication 10, dans laquelle l'adsorbeur a une première paire de soupapes sur des côtés opposés d'au moins une partie du passage, dans lequel ladite au moins une soupape champignon d'admission (234, 306, 406) située de la première tête et ladite au moins une soupape champignon d'échappement (252) située dans la deuxième tête sont chacune dans une position sensiblement ouverte quand un écoulement de fluide dans le passage se fait dans une première direction d'écoulement et une position sensiblement fermée quand un écoulement de fluide dans le passage se fait dans une deuxième direction d'écoulement, opposée.

FIG. 1

FIG. 2

EP 2 575 997 B1

*FIG. 3*

*FIG. 4*

**"INNIE"**

ID pipe

ID port

Annular
Port Area

Gasket

OD head

Cylindrical
Curtain
Area

## Fig. 5A

ID port

OD head

Annular
Port
Area

Cylindrical
Curtain Area

**"OUTIE"**

## Fig. 5B

INTERLOCKING POPPET VALVE

BOLT-IN ASSEMBLY

VALVE CLOSED     VALVE OPEN

REACTANT BED

PARTIAL ELEVATION VIEW

14" PORT DIA

INTERNAL SHOCK ABSORBER
CAN BE INTEGRATED INTO
SUPPORT STEM

45 DEGREE
VALVE SEAT

LIFT

3.25"
PORT DIA.

VALVE OPEN

STATIC VALVE PORT     DYNAMIC POPPET
VALVE

O-RING BYPASS
GAS SEAL

INTERLOCKING SEAT

PRESSURE SIDE
(VALVE SEATS ARE REVERSED FOR OPPOSITE FLOW PATH)

VALVE CLOSED

14" PORT DIAMETER = 44" CIRCUMFERENCE
3.25" PORT DIAMETER = 10.20" CIRCUMFERENCE
10.20" (5)= 51" COMBINED CIRCUMFERENCE

95" TOTAL CIRCUMFERENCE
216% INCREASE OVER THE SINGLE POPPET VALVE AREA

Fig. 6

COMPACT MULTI-PORT REACTANT BED VALVE

EXTERNAL SHAFT SEAL
AND BEARING ASSEMBLY

BOLT-ON
PROCESS PORT

BY-PASS
RING GASKET

APERTURE SEAL

VALVE BODY

INDEX APERTURE
AND DRIVE SHAFT

PERFORATED GRID

ASSEMBLY HUB WITH
INTERNAL SHAFT SEAL

SPOT FACE MACHINE
AT EACH LOCATION

APERTURE SEAL

COMPONENT ASSEMBLY VIEWS

ROTATABLE
INDEX APERTURE

PORT CLOSED

6" PROCESS
CONDUIT

FIXED SEAL ALIGNS WITH
GAS STREAM APERTURE

PORT OPEN

DETAILED CUTAWAY SECTIONS
THROUGH VALVE BODY

Fig. 7

COMPACT MULTI-PORT BED VALVE

PLAN VIEW

PARTIAL ELEVATION VIEW

BOTTOM VIEW

PARTIAL CUTAWAY THROUGH VESSEL SHELL

VESSEL SHELL

BED

6" PROCESS CONDUIT

FIXED APERTURE SEAL

SHAFT CONNECTION TO AN ELECTRIC STEP CONTROL MOTOR

VALVE BODY

PERFORATED GRID PLATE (FIXED IN PLACE) 864 - .25" DIAMETER HOLES

DETAILED CUTAWAY SECTIONS THROUGH VALVE BODY

CROSS SECTION THROUGH VALVE BODY

6" PROCESS CONDUIT

FACE SEAL

FLOW PATH

ROTATABLE INDEX APERTURE

42" O.D.

FASTENER HARDWARE AND WELDS ARE NOT SHOWN

Fig. 8

32

VALVE CLOSED

INTERLOCKING POPPET VALVE

VALVE OPEN

5- INTERLOCKING STATIC VALVE PORTS

SINGLE DYNAMIC POPPET VALVE

FLOW VANE

POPPET VALVE STEM CONNECTED TO AN ELECTRIC ACTUATOR HAVING AN ANTI-ROTATION GUIDE

SUPPORT RING (NOT SHOWN IN ALL VIEWS FOR CLARITY)

SUPPORT STEM IS ILLUSTRATED IN A SIMPLE FORM TO DEMONSTRATE THE CONCEPT

COMPACT ASSEMBLY BOLTS INTO REACTOR COVER PLATE

**FEATURES:**
- ONE- MOVING PART CONTROLS MULTIPLE CONCENTRIC FLOW PORTS.
- LESS SURFACE DRAG AGAINST POPPET VALVE FACE DURING OPERATING CYCLES.
- IMPROVED MEANS OF DECREASING THE STAGNANT AREA BELOW THE POPPET VALVE.
- IMPROVED MEANS OF INCREASING EFFECTIVE CURTAIN FLOW AREA WITHOUT INCREASING THE NUMBER OF POPPET VALVES.

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61448160
- US 61349464
- US 2011035553 W
- US 20050045236 A1
- US 2438467 A
- US 2257178 A
- US 5212948 A
- US 4404004 A
- US 20070144940

- US 20080282892
- US 20080282887 A
- US 20080282886 A
- US 20080282885 A
- US 20080282884 A
- US 61447848
- US 2008028286 A
- US 20080282887
- US 20090211441 A